(19) Europäisches Patentamt
European Patent Office
Office européen des brevets

(11) **EP 4 610 381 A2**

(12) **EUROPÄISCHE PATENTANMELDUNG**

(43) Veröffentlichungstag:
**03.09.2025   Patentblatt 2025/36**

(21) Anmeldenummer: **25190424.9**

(22) Anmeldetag: **15.02.2024**

(51) Internationale Patentklassifikation (IPC):
*C22C 38/04* *(2006.01)*

(52) Gemeinsame Patentklassifikation (CPC):
**C21D 1/673; B32B 15/01; C21D 1/18; C21D 1/26; C21D 7/13; C21D 8/0205; C21D 8/0226; C21D 8/0247; C21D 8/0263; C21D 8/0273; C21D 9/46; C22C 38/02; C22C 38/04; C22C 38/06; C23C 2/02;**          (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität:  **17.02.2023   EP 23157148**

(62) Dokumentnummer(n) der früheren Anmeldung(en) nach Art. 76 EPÜ:
**24704830.9 / 4 460 586**

(71) Anmelder: **ThyssenKrupp Steel Europe AG**
**47166 Duisburg (DE)**

(72) Erfinder:
• **Dr. Bienholz, Stefan**
**47166 Duisburg (DE)**

• **Dr. Marx, Volker**
**47166 Duisburg (DE)**
• **Bartelheimer, Aleksandra**
**47166 Duisburg (DE)**
• **Köyer, Maria**
**47166 Duisburg (DE)**
• **Dr. Castro Müller, Cássia**
**47166 Duisburg (DE)**

(74) Vertreter: **ThyssenKrupp Steel Europe AG**
**SE/INN-IPM**
**Kaiser-Wilhelm-Straße 100**
**47166 Duisburg (DE)**

Bemerkungen:
Diese Anmeldung ist am 18.07.2025 als Teilanmeldung zu der unter INID-Code 62 erwähnten Anmeldung eingereicht worden.

(54) **HOCHFESTER STAHL MIT VERBESSERTER RESISTENZ GEGEN WASSERSTOFFVERSPRÖDUNG**

(57)     Die Erfindung betrifft ein Stahlflachprodukt für die Warmumformung, ein umgeformtes Blechformteil und jeweils Verfahren zu deren Herstellung, wobei das Stahlflachprodukt und das Blechformteil insbesondere in Verbindung mit einem Korrosionsschutzüberzug auf Aluminium-Basis verbesserte Resistenz gegen Wasserstoffversprödung aufweisen.

EP 4 610 381 A2

(52) Gemeinsame Patentklassifikation (CPC): (Forts.)
**C23C 2/12; C23C 2/26; C23C 2/28; C23C 2/29;
C23C 2/40;** C21D 2211/004

## Beschreibung

Die Erfindung betrifft ein Stahlflachprodukt für die Warmumformung sowie ein Verfahren zur Herstellung eines solchen Stahlflachproduktes. Weiterhin betrifft die Erfindung ein Blechformteil mit verbesserten Eigenschaften und ein Verfahren zur Herstellung eines solchen Blechformteil aus einem Stahlflachprodukt.

Wenn nachfolgend von einem "Stahlflachprodukt" oder auch von einem "Blechprodukt" die Rede ist, so sind damit Walzprodukte, wie Stahlbänder oder -bleche, gemeint, aus denen für die Herstellung von beispielsweise Karosseriebauteilen "Blechzuschnitte" (auch Platinen genannt) abgeteilt werden. "Blechformteile" oder "Blechbauteile" der erfindungsgemäßen Art sind aus derartigen Blechzuschnitten hergestellt, wobei hier die Begriffe "Blechformteil" und "Blechbauteil" synonym verwendet werden.

Alle Angaben zu Gehalten der in der vorliegenden Anmeldung angegebenen Stahlzusammensetzungen sind auf das Gewicht bezogen, sofern nicht ausdrücklich anders erwähnt. Alle nicht näher bestimmten, im Zusammenhang mit einer Stahllegierung stehenden "%-Angaben" sind daher als Angaben in "Gew.-%" zu verstehen. Mit Ausnahme der auf das Volumen (Angabe in "Vol.-%") bezogenen Angaben zum Restaustenit-Gehalt des Gefüges eines erfindungsgemäßen Blechformteils beziehen sich Angaben zu den Gehalten der verschiedenen Gefügebestandteile jeweils auf die Fläche eines Schliffs einer Probe des jeweiligen Erzeugnisses (Angabe in Flächenprozent "Flächen-%"), soweit nicht ausdrücklich anders angegeben. In diesem Text gemachte Angaben zu den Gehalten der Bestandteile einer Atmosphäre beziehen sich auf das Volumen (Angabe in "Vol.-%").

Mechanische Eigenschaften, wie Zugfestigkeit, Streckgrenze, Dehnung, die hier berichtet werden, sind im Zugversuch gemäß DIN EN ISO 6982-1, Probenform 2 (Anhang B Tab. B1) (Stand 2020-06) ermittelt worden, soweit nicht ausdrücklich anders angegeben. Der Biegewinkel wird gemäß der VDA-Norm 238-100 ermittelt.

Das Gefüge wurde an Längsschliffen bestimmt, die einer Ätzung mit 3% Nital (alkoholische Salpetersäure) unterzogen worden sind. Der Anteil an Restaustenit wurde röntgendiffraktometrisch bestimmt.

Aus der WO 2019/223854 A1 sind ein Blechformteil und ein Verfahren zum Herstellen eines solchen Blechformteils bekannt, das eine Zugfestigkeit von mindestens 1000 MPa besitzt. Das Blechformteil besteht dabei aus einem Stahl, der neben Eisen und unvermeidbaren Verunreinigungen aus (in Gew.-%) 0,10 - 0,30 % C, 0,5 - 2,0 % Si, 0,5 - 2,4 % Mn, 0,01 - 0,2 % Al, 0,005 - 1,5 % Cr, 0,01 - 0,1 % P und gegebenenfalls weiteren optionalen Elementen, insbesondere 0,005 - 0,1% Nb, zusammengesetzt ist. Zudem umfasst das Blechbauteil einen Korrosionsschutzüberzug, der Aluminium enthält.

Aus der EP 2 553 133 B1 ist ebenfalls ein Blechformteil und ein Verfahren zum Herstellen eines solchen Blechformteils bekannt.

Im Anlieferungszustand sind alle Mangan-Bor-Stahlgüten wasserstoffarm. Ihre Gehalte an diffusiblem Wasserstoff liegen jeweils unterhalb der Nachweisgrenze von derzeit 0,1 ppm. Infolgedessen zeigen MnB-Stähle grundsätzlich nur eine geringe Neigung zur wasserstoffinduzierten verspäteten Rissbildung. In der Praxis hat sich jedoch gezeigt, dass es bei der Warmumformung von Mangan-Bor-Stählen bei feuchteren Ofenatmosphären zu einer Wasserstoffanreicherung im Stahlsubstrat kommt. Als Grund hierfür ist eine Metall-Wasserdampf Reaktion identifiziert worden. Zu dieser Reaktion kommt es, wenn das Stahlflachprodukt für die Warmumformung in einem Erwärmungsofen unter einer Wasserdampf-enthaltenden Atmosphäre auf höhere Temperaturen erwärmt wird. Dabei reagiert der in der Ofenatmosphäre befindliche Wasserdampf an der Werkstoffoberfläche zu Wasserstoff und einem Metalloxid. Der entstehende Wasserstoff diffundiert in den Stahlwerkstoff und kann dann dort zu einem verzögerten Versagen führen, indem er sich bevorzugt in Bereichen hoher Zug-Eigenspannung konzentriert. Wird eine lokal sehr hohe Wasserstoffkonzentration erreicht, schwächt dies die Bindung an den Korngrenzen des Stahlsubstratgefüges so weit, dass es im Gebrauch infolge der dabei auftretenden Spannung zu einem Riss entlang der Korngrenze kommt.

Zur Vermeidung des Wasserstoffeintrags infolge der Oberflächenreaktion im Ofen werden häufig Taupunktregeleinrichtungen eingesetzt. Ziel ist es hier, das Wasserdampfangebot in der Ofenatmosphäre zu begrenzen.

Aus der EP 2 993 248 B1 ist bekannt bei Stahlflachprodukten mit einem Korrosionsschutzüberzug auf Aluminium-Basis eine Beimischung von Alkali- oder Erdalkalimetallen zu verwenden, die sehr schnell eine schützende Oxidschicht an der Oberfläche bilden und so die Oberflächenreaktion mit Wasserdampf verhindern. Es wird also weniger freier Wasserstoff produziert, der in das Stahlsubstrat eindiffundieren kann.

Weiterhin kommt es beim automobiltypischen Einsatz der Blechformteile zu Korrosion. Dies ist insbesondere bei unbeschichteten Substraten der Fall. Bei dieser Korrosion entsteht ebenfalls Wasserstoff, der in den Stahlwerkstoff diffundiert und dort zu einem verzögerten Versagen führen kann, indem er sich bevorzugt in Bereichen hoher Zug-Eigenspannung konzentriert. Wird eine lokal sehr hohe Wasserstoffkonzentration erreicht, schwächt dies die Bindung an den Korngrenzen des Stahlsubstratgefüges so weit, dass es im Gebrauch infolge der dabei auftretenden Spannung zu einem Riss entlang der Korngrenze kommt.

Aufgabe der vorliegenden Erfindung ist es, den Gehalt an freiem Wasserstoff bei Blechformteilen noch weiter zu reduzieren, insbesondere auch bei unbeschichteten Substraten.

Weitere Aufgabe der vorliegenden Erfindung ist, die Anfälligkeit gegen Wasserstoffversprödung unter Korrosion zu reduzieren.

Diese Aufgabe wird gelöst durch ein Stahlflachprodukt für die Warmumformung, umfassend ein Stahlsubstrat aus Stahl, der neben Eisen und unvermeidbaren Verunreinigungen (in Gew.-%) aus

| C: | 0,25 - 0,8 %, |
|---|---|
| Si: | 0,01 - 2,0 %, |
| Al: | 0,001 - 1,0 %, |
| B: | 0,0005 - 0,01 %, |
| P: | ≤ 0,03 %, |
| S: | ≤ 0,02 %, |
| N: | ≤ 0,03 %, |
| Sn: | ≤ 0,03 %, |
| As: | ≤ 0,01 %, |
| Sb: | ≤ 0,02 %, |

mindestens eines der Elemente aus der Gruppe umfassend Ti, Nb und V mit der Maßgabe, dass für die Gehalte gilt:

| Ti: | 0,008 - 0,10 %, |
|---|---|
| Nb: | 0,01 - 0,07 %, |
| V: | 0,01 - 0,4 %, |

sowie optional einem oder mehreren der Elemente "Cr, Mn, Co, Cu, Mo, Ni, Ca, W, Ce, La" in folgenden Gehalten:

| Cr: | 0,01 - 1,0 %, |
|---|---|
| Mn: | 0,01 - 3,5 %, |
| Co: | 0,05 - 1,0 %, |
| Cu: | 0,01 - 0,2 %, |
| Mo: | 0,002 - 1,0 %, |
| Ni: | 0,01 - 2,0 %, |
| Ca: | 0,0005 - 0,01 %, |
| W: | 0,001 - 1,0 %, |
| Ce+La: | 0,01 - 0,03 % |

besteht, wobei für einen Dispersionsgrad $D_1$ von Ausscheidungen im oberflächennahen Drittel des Stahlsubstrates gilt:

$$25 \cdot 10^{-6} \frac{1}{nm} < D_1 < 5 \cdot 10^{-3} \frac{1}{nm}$$

Dabei ist der Dispersionsgrad $D_1$ von Ausscheidungen definiert als das Verhältnis aus Flächenanteil der Ausscheidungen im metallographischen Schliff zum Durchmesser der Ausscheidungen, wobei der Flächenanteil der Ausscheidungen das Verhältnis der Gesamtfläche der Ausscheidungen in einem Messfeld zur Größe des Messfeldes ist. Bei dem Durchmesser handelt es sich um den mittleren Durchmesser über das Messfeld.

Erfindungsgemäß wirken die Ausscheidungen als Fallen für den freien Wasserstoff. Von außen eindringender freier Wasserstoff wird also an den Ausscheidungen lokalisiert. Folglich wird eine hohe Konzentration in Regionen mit großer Zug-Eigenspannung vermieden. Es hat sich gezeigt, dass diese Wirkung bei einer zu geringen Dispersion $D_1$ praktisch nicht mehr vorhanden ist. Dies bedeutet, dass die Ausscheidungen zu groß sind und/oder der Anteil der Ausscheidungen zu gering ist. Es steht dann keine ausreichende spezifische Grenzfläche zwischen Ausscheidungen und Substrat zur Verfügung, um Wasserstoff effektiv zu lokalisieren. Ist dagegen die Dispersion $D_1$ zu groß, führen die Ausscheidungen selbst zu einer Verminderung der mechanischen Belastbarkeit.

Dies wird durch eine rücktreibende Kraft der Ausscheidungen auf die Bewegung von Versetzungen im Kristall, den sogenannten Zener-Drag bewirkt. Dieser Zener-Drag ist direkt proportional zur Dispersion $D_1$. Die Versetzungs-

bewegung ihrerseits bewirkt die plastische Verformung und beeinflusst damit unmittelbar auch den erreichbaren Biegewinkel So reduziert sich zum Beispiel der Biegewinkel deutlich. Insbesondere beträgt die Dispersion $D_1$ mindestens $35 \cdot 10^{-6}\frac{1}{nm}$, besonders bevorzugt mindestens $15 \cdot 10^{-5}\frac{1}{nm}$. Weiterhin bevorzugt beträgt die Dispersion $D_1$ maximal $2 \cdot 10^{-3}\frac{1}{nm}$, insbesondere maximal $9{,}0 \cdot 10^{-4}\frac{1}{nm}$.

Gemessen wird die Verteilung der Ausscheidungen und damit die Dispersion $D_1$ mit Hilfe von elektronen-optischen Aufnahmen in Kombination mit Röntgenmikroanalytik (TEM und EDX) anhand von Kohlenstoffausziehabdrücken (in der Fachliteratur bekannt als "carbon extraction replicas") bestimmt. Hergestellt werden die Kohlenstoffausziehabdrücke an Längsschliffen. Die Vergrößerung der Messung liegt zwischen 10.000-fach und 200.000-fach. Anhand dieser Aufnahmen lässt sich mittels computergestützter Bildanalyse der mittlere Durchmesser und der Flächenanteil der Ausscheidungen am Messfeld berechnen. Es werden jeweils 5 Messfelder hierzu vermessen. Anschließend wird über die Ergebnisse der 5 Messfelder gemittelt. Die Größe der Messfelder ist abhängig von der gewählten Vergrößerung und liegt zwischen 18,5 μm x 14,5 μm bei 10.000-facher Vergrößerung und 0,925 μm x 0,725 μm bei 200.000-facher Vergrößerung.

Beispielsweise kann die Dispersion anhand folgender Schritte bestimmt werden:

- Anfertigen von Kohlenstoffausziehabdrücken eines Längsschliffes des Stahlflachproduktes bzw. Blechformteils;

- Bestimmen des mittleren Durchmessers und des Flächenanteils der Ausscheidungen auf 5 verschiedenen Messfel-dern der Größe 1,85μm x 1,45μm mittels TEM und computergestützter Bildanalyse bei einer Vergrößerung von 100.000-fach;

- Berechnen der Dispersion in jedem der 5 Messfelder aus dem mittleren Durchmesser und dem Flächenanteil;

- Bestimmung der Dispersion des Stahlflachprodukt bzw. Blechformteils als Mittelwertes der Dispersion über die 5 Messfelder.

Für die Dispersion $D_1$ von Stahlflachprodukt bzw. Blechformteil werden die 5 Messfelder in das oberflächennahe Drittel des Stahlsubstrates gelegt.

Für später erläuterte Dispersion $D_2$ in der Legierungsschicht des Blechformteils gilt das entsprechende Messverfahren, nur dass die 5 Messfelder in die Legierungsschicht gelegt werden.

Bei den Ausscheidungen handelt es sich insbesondere um Karbide und/oder Karbonitride von einem oder mehreren der Elemente aus der Gruppe Vanadium, Titan, Niob, Chrom und Molybdän. Bei den Elementen Vanadium, Titan und Niob handelt es sich um sogenannte Mikrolegierungselemente, die bereits in kleinsten Mengen eine Wirkung entfalten.

Unter dem oberflächennahen Drittel der Stahlsubstrates ist der Bereich des Stahlsubstrates zu verstehen, der von einer Oberfläche des Stahlsubstrates einen Abstand hat, der maximal einem Drittel der Dicke des Stahlsubstrates entspricht. Dies bedeutet, dass man das Stahlsubstrat gedanklich in drei zur Oberfläche parallele Scheiben gleicher Dicke aufteilt. Die mittlere Scheibe enthält dann den zentralen Bereich des Stahlsubstrates, in dem die Mittelebene liegt. Die beiden anderen Scheiben werden jeweils durch eine der beiden Oberflächen des Stahlsubstrates begrenzt. Diese beiden Scheiben bilden die beiden oberflächennahe Drittel des Stahlsubstrates.

Kohlenstoff ("C") ist im Stahlsubstrat des Stahlflachproduktes in Gehalten von 0,25 - 0,8 Gew.-% enthalten. Derart eingestellte C-Gehalte tragen zur Härtbarkeit des Stahls bei, indem sie die Ferrit- und Bainitbildung verzögern sowie den Restaustenit im Gefüge stabilisieren. Ein Kohlenstoffgehalt von mindestens 0,06 Gew.-% ist erforderlich, um eine ausreichende Härtbarkeit und eine damit einhergehende hohe Festigkeit zu erzielen.

Durch hohe C-Gehalte kann allerdings die Schweißbarkeit negativ beeinflusst werden. Um die Schweißbarkeit zu verbessern, kann der Kohlenstoffgehalt auf höchstens 0,5 Gew.-% bevorzugt auf höchstens 0,50 Gew.-%, besonders bevorzugt 0,45 Gew.-%, bevorzugt maximal 0,38 Gew.-%, insbesondere maximal 0,35 Gew.-% eingestellt werden.

Um die positiven Effekte der Anwesenheit von C besonders sicher nutzen zu können, können C-Gehalte von mindestens 0,28 Gew.-%, bevorzugt mindestens 0,30 Gew.-%, insbesondere mindestens 0,31 Gew.-%, bevorzugt mindestens 0,32 Gew.-% vorgesehen werden. Bei diesen Gehalten lassen sich unter Beachtung der weiteren Maßgaben der Erfindung Zugfestigkeiten des Blechformteils von mindestens 1500 MPa, insbesondere mindestens 1750 MPa nach Warmpressformen sicher erreichen.

Silizium ("Si") wird zur weiteren Erhöhung der Härtbarkeit des Stahlflachprodukts sowie der Festigkeit des pressgehärteten Produkts über Mischkristallverfestigung verwendet. Silizium ermöglicht außerdem den Einsatz von Ferro-Silizio-Mangan als Legierungsmittel, was sich begünstigend auf die Produktionskosten auswirkt. Silizium ist im Stahlsubstrat des Stahlflachproduktes in Gehalten von 0,01 - 2,0 Gew.-%, insbesondere in Gehalten von 0,02 - 2,0 Gew.-% enthalten. Ab einem Si-Gehalt von 0,05 Gew.-% stellt sich bereits ein Härtungseffekt ein. Ab einem Si-Gehalt von mindestens 0,15 Gew.-%, insbesondere mindestens 0,20 Gew.-% tritt ein signifikanter Anstieg der Festigkeit auf. Si-Gehalte oberhalb von 0,65 Gew.-% wirken sich nachteilig auf das Beschichtungsverhalten aus, insbesondere bei Al-basierten Beschichtungen. Si-Gehalte von höchstens 0,55 Gew.-%, insbesondere höchstens 0,30 Gew.-% werden bevorzugt eingestellt, um die Oberflächenqualität des beschichteten Stahlflachprodukts zu verbessern.

Aluminium ("Al") wird bei der Erzeugung von Stahl bekanntermaßen als Desoxidationsmittel hinzugegeben. Dabei beträgt der Gehalt des Stahlsubstrates mindestens 0,001 Gew.-%, insbesondere mindestens 0,01 Gew.-%, insbesondere mindestens 0,02 Gew.-%, bevorzugt mindestens 0,11 Gew.-%, insbesondere mindestens 0,15 Gew.-%. Maximal beträgt der Gehalt von Aluminium 1,0 Gew.-%, bevorzugt maximal 0,7 Gew.-%, insbesondere maximal 0,25 Gew.-%. Bei bestimmten Ausführungsformen beträgt der maximale Aluminium-Gehalt 0,10 Gew.-%, bevorzugt maximal 0,05 Gew.-%. Zur sicheren Abbindung des in der Stahlschmelze enthaltenen Sauerstoffs werden mindestens 0,01 Gew.-% Al benötigt. Al kann darüber hinaus zusätzlich zur Abbindung von unerwünschten, jedoch herstellungsbedingt unvermeidbaren Gehalten an N verwendet werden. Vergleichsweise hohe Aluminium-Gehalte wurden bislang vermieden, da sich mit dem Aluminium-Gehalt auch die Ac3-Temperatur nach oben verschiebt. Dies wirkt sich negativ auf die, für die Warmumformung wichtige, Austenitisierung aus. Es hat sich jedoch gezeigt, dass erhöhte Aluminium-Gehalte überraschenderweise zu positiven Effekten führen in Verbindung mit einem Korrosionsschutzüberzug auf Aluminium-Basis.

Überraschenderweise hat sich gezeigt, dass durch die Erhöhung des Aluminium-Gehaltes ("Al") im Stahlsubstrat auf die beschriebenen Untergrenzen und darüber hinaus eine deutliche Reduzierung der Porenbildung bei der Beschichtung mit einem Korrosionsschutzüberzug auf Aluminium-Basis und der nachfolgenden Warmumformung erreicht werden kann. Insbesondere im Übergangsbereich zwischen Stahlsubstrat und Korrosionsschutzüberzug kann der lokal höhere Aluminiumverbrauch bei der Bildung dichterer Eisen-Aluminidverbindungen zumindest teilweise durch den Aluminium-Gehalt des Stahlsubstrates kompensiert werden, so dass die Bildung von Poren, insbesondere eines Bandes aus Poren, unterdrückt wird.

Bei einem zu hohen Al-Gehalt, insbesondere bei Gehalten von mehr als 1,0 Gew-% Al, besteht die Gefahr, dass sich an der Oberfläche eines aus erfindungsgemäß legiertem Stahlwerkstoff gefertigten Produkts Al-Oxide bilden, die das Benetzungsverhalten beim Schmelztauchbeschichten verschlechtern würden. Zudem wird bei höheren Al-Gehalten die Bildung von nichtmetallischen Al-basierten Einschlüssen begünstigt, die als grobe Einschlüsse das Crashverhalten negativ beeinflussen. Daher wird der Al-Gehalt bevorzugt unterhalb der bereits genannten Obergrenzen gewählt.

Weiterhin umfasst der Stahl mindestens eines der Elemente aus der Gruppe umfassend Ti, Nb und V. Dies bedeutet, dass der Stahl mindestens eines der Elemente Ti, Nb oder V enthält. Der Stahl kann auch bevorzugt zwei Elemente der Gruppe (Ti, Nb oder Ti, V oder Nb, V) oder insbesondere alle drei Elemente der Gruppe enthalten (Ti, Nb und V). Für die Gehalte der drei Elemente gelten in jedem Fall die unten aufgeführten Grenzen mit ihren bevorzugten Bereichen.

Die Mikrolegierungselemente Vanadium, Niob und Titan bilden alle Ausscheidungen, die zur Kornfeinung beitragen und als Fallen für freien Wasserstoff dienen. Aufgrund der unterschiedlichen Löslichkeiten treten die Ausscheidungen allerdings bei unterschiedlichen Temperaturen auf. Ti-Ausscheidungen haben die niedrigste Löslichkeit in Austenit und scheiden daher bereits bei sehr hohen Temperaturen aus und setzen das Kornwachstum von Austenit herab. Nb scheidet ab mittleren Temperaturen aus und Vanadium erst unterhalb von ca. 900 °C. Damit führt Vanadium zu besonders feinen Ausscheidungen. Ansonsten kommt es bei allen drei Elementen zu dem analogen Mechanismus. Im Folgenden ist beispielhaft der Mechanismus anhand von Niob erläutert. Für Vanadium und Titan gilt das entsprechende.

Der Niob-Gehalt führt insbesondere beim dem nachfolgend beschriebenen Verfahren zum Herstellen eines Stahlflachprodukts für die Warmumformung mit einem Korrosionsschutzüberzug zu einer Verteilung von Niobkarbiden und Niobkarbonitriden, die beim anschließenden Warmumformen zu einem besonders feinen Härtungsgefüge führt. Während des Abkühlens nach dem Schmelztauchbeschichten wird das beschichtete Stahlflachprodukt für eine gewisse Zeit in einem Temperaturbereich von 400 °C und 300 °C gehalten. In diesem Temperaturbereich besteht noch eine gewisse Diffusionsgeschwindigkeit von Kohlenstoff im Stahlsubstrat, während die thermodynamische Löslichkeit sehr gering ist. Somit diffundiert Kohlenstoff zu Gitterstörungen und sammelt sich dort.

Gitterstörungen werden insbesondere durch gelöste Niob-Atome verursacht, die durch ihr deutlich höheres Atomvolumen das Atomgitter aufweiten und somit die Tetraeder- und Oktaederlücken im Atomgitter vergrößern, sodass die lokale Löslichkeit von C erhöht ist. Folglich ergeben sich Cluster von C und Nb im Stahlsubstrat, welche sich dann im nachfolgenden Austenitisierungsschritt der Warmumfomung zu sehr feinen Ausscheidungen in Form von Niobkarbiden und Niobkarbonitriden umwandeln und als zusätzliche Austenitkeime wirken. Daher ergibt sich ein verfeinertes Austenitgefüge mit kleineren Austenitkörnern und damit auch ein verfeinertes Härtungsgefüge. Weiterhin bilden diese Ausscheidungen Fallen für den freien Wasserstoff und fördern so die erfindungsgemäße Resistenz gegen Wasserstoffversprödung.

Dies betrifft insbesondere auch die sich in der Warmumformung ausbildende ferritische Interdiffusionsschicht.

Das verfeinerte ferritische Gefüge in der Interdiffusionsschicht unterstützt die Reduzierung der Risseinleitungstendenzen unter Biegebelastungen und die Ausscheidungen in der ferritischen Interdiffusionsschicht fangen den freien Wasserstoff ab, bevor er sich im Inneren des Substrates konzentrieren kann.

Für die oben beschriebene Wirkung beträgt der Gehalt an Nb mindestens 0,01 Gew.-%, insbesondere mindestens 0,010 Gew.-%. Bei bestimmten Ausführungsvarianten beträgt der Gehalt an Niob mindestens 0,04 Gew.-%. Maximal beträgt der Gehalt an Niob 0,07 Gew.-%, insbesondere maximal 0,05 Gew.-%, bevorzugt 0,03 Gew.-%.

Der Titan-Gehalt für die oben beschriebene Wirkung beträgt mindestens 0,008 Gew.-% Ti, insbesondere mindestens 0,010 Gew.-%, bevorzugt mindestens 0,015 Gew.-% Ti, für eine ausreichende Verfügbarkeit hinzugegeben werden sollten. Ab 0,10 Gew.-% Ti verschlechtert sich die Kaltwalzbarkeit und Rekristallisierbarkeit deutlich, weshalb größere Ti-Gehalte vermieden werden sollten. Um die Kaltwalzbarkeit zu verbessern, kann der Ti-Gehalt bevorzugt auf 0,08 Gew.-%, insbesondere auf 0,050 Gew.-%, besonders bevorzugt auf 0,040 Gew.-%, insbesondere 0,020 Gew.-% beschränkt sein. Titan hat zudem den Effekt, Stickstoff abzubinden und so Bor zu ermöglichen, seine stark ferrithemmende Wirkung zu entfalten. Daher beträgt bei einer bevorzugten Weiterbildung der Titan-Gehalt mehr als das 3,42-fache des Stickstoffgehaltes, um eine ausreichende Abbindung von Stickstoff zu erreichen.

Für die oben beschriebene Wirkung beträgt der Gehalt an V mindestens 0,01 Gew.-%, insbesondere mindestens 0,02 Gew.-%, bevorzugt mindestens 0,04 Gew.-%, insbesondere mindestens 0,10 Gew.-%. Aus Kostengründen wird maximal 0,4 Gew.-%, bevorzugt maximal 0,25 Gew.-% Vanadium hinzulegiert.

Die Elemente Nb, V und Ti können auch unterhalb der oben genannten Mindestgehalte als Verunreinigungen im Stahl vorkommen.

Bor ("B") wird hinzulegiert, um die Härtbarkeit des Stahlflachprodukts zu verbessern, indem auf den Austenitkorngrenzen angelagerte Boratome oder Borausscheidungen die Korngrenzenenergie verringern, wodurch die Nukleation von Ferrit während des Presshärtens unterdrückt wird. Ein deutlicher Effekt auf die Härtbarkeit tritt bei Gehalten von mindestens 0,0005 Gew.-%, bevorzugt mindestens 0,0007 Gew.-%, insbesondere mindestens 0,0010 Gew.-%, insbesondere mindestens 0,0020 Gew.-% auf. Bei Gehalten über 0,01 Gew.-% bilden sich hingegen vermehrt Borkarbide, Bornitride oder Bornitrokarbide, welche wiederum bevorzugte Keimstellen für die Nukleation von Ferrit darstellen und den härtenden Effekt wieder absenken. Aus diesem Grund wird der Borgehalt auf höchstens 0,01 Gew.-%, bevorzugt höchstens 0,0100 Gew.-%, bevorzugt höchstens 0,0050 Gew.-%, insbesondere höchstens 0,0035 Gew.-%, insbesondere höchstens 0,0030 Gew.-%, bevorzugt höchstens 0,0025 Gew.-% beschränkt.

Phosphor ("P") und Schwefel ("S") sind Elemente, die als Verunreinigungen durch Eisenerz in den Stahl eingeschleppt werden und nicht vollständig im großtechnischen Stahlwerksprozess beseitigt werden können. Der P-Gehalt und der S-Gehalt sollten so gering wie möglich gehalten werden, da sich die mechanischen Eigenschaften wie zum Beispiel die Kerbschlagarbeit mit zunehmendem P-Gehalt bzw. S-Gehalt verschlechtern. Ab P-Gehalten von 0,03 Gew.-% tritt zudem eine beginnende Versprödung des Martensits auf, weshalb der P-Gehalt eines erfindungsgemäßen Stahlflachprodukts bevorzugt auf höchstens 0,02 Gew.-%, insbesondere höchstens 0,015 Gew.-%, begrenzt ist. Der S-Gehalt eines erfindungsgemäßen Stahlflachprodukts ist auf höchstens 0,02 Gew.-%, bevorzugt höchstens 0,0020 Gew.-%, insbesondere höchstens 0,0010 Gew.-%, begrenzt.

Stickstoff ("N") ist ebenfalls aufgrund des Stahlfertigungsprozesses in geringen Mengen im Stahl als Verunreinigungen vorhanden. Der N-Gehalt ist möglichst gering zu halten und sollte höchstens 0,03 Gew.-%, insbesondere höchstens 0,02 Gew.-% betragen. Insbesondere bei Legierungen, die Bor enthalten, ist Stickstoff schädlich, da es durch die Bildung von Bornitriden den umwandlungsverzögernden Effekt von Bor verhindert, weshalb der Stickstoffgehalt in diesem Fall bevorzugt, höchstens 0,010 Gew.-%, insbesondere höchstens 0,007 Gew.-%, betragen sollte.

Weitere typische Verunreinigungen sind Zinn ("Sn"), Arsen ("As") und Antimon ("Sb"). Der Sn-Gehalt beträgt maximal 0,03 Gew.-%, bevorzugt maximal 0,02 Gew.-%. Der As-Gehalt beträgt maximal 0,01 Gew.-%, insbesondere maximal 0,005 Gew.-%. Der Sb-Gehalt beträgt maximal 0,02 Gew.-%, insbesondere maximal 0,01 Gew.-%, insbesondere maximal 0,005 Gew.-%.

Neben den zuvor erläuterten Verunreinigungen P, S, N, Sn, As und Sb können auch noch weitere Elemente als Verunreinigungen im Stahl vorhanden sein. Diese weiteren Elemente werden unter den "unvermeidbaren Verunreinigungen" zusammengefasst. Bevorzugt beträgt der Gehalt an diesen "unvermeidbaren Verunreinigungen" in Summe maximal 0,2 Gew.-%, bevorzugt maximal 0,1 Gew.-%. Die vorstehend und nachfolgend beschriebenen optionalen Legierungselemente Cr, Mn, Co, Cu, Mo, Ni, V, Ti, Ca, W, Ce und La, für die eine Untergrenze angegeben ist, können auch in Gehalten unterhalb der jeweiligen Untergrenze als unvermeidbare Verunreinigungen im Stahlsubstrat vorkommen. In dem Fall werden sie ebenfalls zu den "unvermeidbaren Verunreinigungen" gezählt, deren Gesamtgehalt auf maximal 0,2 Gew.-%, bevorzugt maximal 0,1 Gew.-% begrenzt ist.

Chrom, Mangan, Kobalt, Kupfer, Molybdän, Nickel, Calzium, Wolfram, Cer und Lanthan können dem Stahl eines erfindungsgemäßen Stahlflachprodukts jeweils einzeln oder in Kombination miteinander optional hinzulegiert werden.

Chrom ("Cr") unterdrückt die Bildung von Ferrit und Perlit während einer beschleunigten Abkühlung eines erfindungsgemäßen Stahlflachprodukts und ermöglicht eine vollständige Martensitbildung auch bei geringeren Abkühlraten, wodurch eine Steigerung der Härtbarkeit erzielt wird.

Diese genannten Effekte stellen sich ab einem Gehalt von 0,01 Gew.-% ein, wobei sich ein Gehalt von mindestens 0,10 Gew.-%, bevorzugt mindestens 0,20 Gew.-% in der Praxis für eine sichere Prozessführung bewährt hat. Zu hohe Gehalte an Cr beeinträchtigen allerdings die Beschichtbarkeit des Stahls. Deshalb ist der Cr-Gehalt des Stahls eines des Stahlsubstrates auf höchstens 1,0 Gew.-%, insbesondere maximal 0,75 Gew.-%, bevorzugt maximal 0,50 Gew.-% beschränkt.

Molybdän (Mo) kann zur Verbesserung der Prozessstabilität optional hinzugegeben werden, da es die Ferritbildung deutlich verlangsamt. Ab Gehalten von 0,002 Gew.-% bilden sich dynamisch Molybdän-Kohlenstoff Cluster bis hin zu ultrafeinen Molybdänkarbiden auf den Korngrenzen, welche die Beweglichkeit der Korngrenze und somit diffusive Phasenumwandlungen deutlich verlangsamen. Außerdem wird durch Molybdän die Korngrenzenenergie verringert, was die Nukleationsrate von Ferrit verringert. Bevorzugt beträgt der Mo-Gehalt mindestens 0,004 Gew.-%, insbesondere mindestens 0,01 Gew.-%, insbesondere mindestens 0,1 Gew.-%, bevorzugt mindestens 0,10 Gew.-%. Aufgrund der hohen Kosten, welche mit einer Legierung von Molybdän verbunden sind, sollte der Gehalt höchstens 1,0 Gew.-%, insbesondere höchstens 0,80 Gew.-%, bevorzugt höchstens 0,30 Gew.-% betragen.

Chrom und Molybdän bilden zudem ebenfalls Ausscheidungen in ähnlicher Weise wie die Mikrolegierungselemente Nb, V und Ti, wobei der Wirkung jedoch geringer ausfällt. Daher unterstützt die Zugabe eines oder beider dieser Elemente in den oben genannten Mengen die Bildung von Ausscheidungen mit der erfindungsgemäßen Dispersion.

Mangan ("Mn") wirkt als härtendes Element, indem es die Ferrit- und die Bainitbildung stark verzögert. Der Mangangehalt beträgt 0,01 - 3,5 Gew.-%. Bei Mangangehalten kleiner 0,2 Gew.-% werden während des Presshärtens selbst bei sehr schnellen Abkühlgeschwindigkeiten signifikante Anteile von Ferrit und Bainit gebildet, was vermieden werden sollte. Mn-Gehalte von mindestens 0,7 Gew.-%, bevorzugt mindestens 0,8 Gew.-%, insbesondere von mindestens 0,9 Gew.-%, besonders bevorzugt von mindestens 1,10 Gew.-%, sind vorteilhaft, wenn ein martensitisches Gefüge insbesondere in Bereichen größerer Umformung gewährleistet werden soll. Mangangehalte von mehr als 3,5 Gew.-% wirken sich nachteilig auf die Verarbeitungseigenschaften aus, weshalb der Mn-Gehalt erfindungsgemäßer Stahlflachprodukte auf höchstens 3,5 Gew.-%, bevorzugt höchstens 2,5 Gew.-% beschränkt ist. Vor allem die Schweißbarkeit ist stark eingeschränkt, weshalb der Mn-Gehalt bevorzugt auf höchstens 1,6 Gew.-% und insbesondere auf 1,30 Gew.-% beschränkt ist. Mangangehalte kleiner oder gleich 1,6 Gew.-% werden darüber hinaus auch aus ökonomischen Gründen bevorzugt. Bei einigen Ausführungsformen ist der Mangan-Gehalt auf maximal 0,80 Gew.-%, insbesondere maximal 0,70 Gew.-% beschränkt.

Kobalt ("Co") kann als optionales Legierungselement zur Festigkeitssteigerung verwendet werden. Hierzu sind Co-Gehalte von mindestens 0,05 Gew.-% dem erfindungsgemäßen Stahlprodukt hinzuzufügen. Bei Co-Gehalten von vorzugsweise mindestens 0,10 Gew.-% ist der festigkeitssteigende Charakter des Co besonders ausgeprägt. Allerdings kann Co ab gewissen Konzentrationen die Einhärtbarkeit senken. Bei Gehalten oberhalb von 0,5 Gew.-% nimmt die negative Wirkung des Co wahrnehmbar zu, weshalb dieser Wert nicht überstiegen wird. Um die Zähigkeitseigenschaften des erfindungsgemäßen Stahlflachprodukts nicht negativ zu beeinflussen, werden vorzugsweise Co-Gehalte von maximal 0,4 Gew.-% und bevorzugt maximal 0,2 Gew.-%, insbesondere maximal 0,15 Gew.-% eingehalten. Unterhalb von 0,01 Gew.-% kann Kobalt als unvermeidbare Verunreinigung in den Stahlsubstraten vorkommen.

Kupfer (Cu) kann optional hinzulegiert werden, um bei Zugaben von mindestens 0,01 Gew.-%, bevorzugt mindestens 0,010 Gew.-%, insbesondere mindestens 0,015 Gew.-% die Härtbarkeit zu erhöhen. Darüber hinaus verbessert Kupfer den Widerstand gegen atmosphärische Korrosion unbeschichteter Bleche oder Schnittkanten. Bei einem zu hohen Cu-Gehalt verschlechtert sich die Warmwalzbarkeit aufgrund niedrigschmelzender Cu-Phasen an der Oberfläche deutlich, weshalb der Cu-Gehalt auf höchstens 0,2 Gew.-%, bevorzugt höchstens 0,1 Gew.-%, insbesondere maximal 0,10 Gew.-% beschränkt ist.

Nickel (Ni) stabilisiert die austenitische Phase und kann optional hinzulegiert werden, um die Ac3-Temperatur zu verringern und die Bildung von Ferrit und Bainit zu unterdrücken. Nickel hat darüber hinaus einen positiven Einfluss auf die Warmwalzbarkeit, insbesondere, wenn der Stahl Kupfer enthält. Kupfer verschlechtert die Warmwalzbarkeit. Zudem ist aus der EP 3 175 006 A1 bekannt, dass signifikante Nickel-Gehalte zu einer oberflächennahen Schicht mit erhöhtem Ni-Gehalt führen können, die ebenfalls das Eindringen von freiem Wasserstoff behindert. Die dort beschriebenen Maßnahmen können daher bevorzugt mit den hier erläuterten Verbesserungen kombiniert werden, um den Gehalt an freiem Wasserstoff noch weiter abzusenken. Daher kann dem Stahl 0,01 Gew.-% Nickel hinzulegiert werden, bevorzugt beträgt der Ni-Gehalt mindestens 0,010 Gew.-%, insbesondere mindestens 0,020 Gew.-%. Aus ökonomischen Gründen sollte der Nickelgehalt auf höchstens 2,0 Gew.-%, bevorzugt maximal 1,0 Gew.-% insbesondere höchstens 0,60 Gew.-%, beschränkt bleiben. Weiterhin bevorzugt beträgt der Ni-Gehalt maximal 0,50 Gew.-%.

Calcium (Ca) dient in Stählen zur Einformung von nichtmetallischen Einschlüssen, insbesondere von Mangansulfiden. Durch die rundliche Einformung wird die negative Wirkung der Einschlüsse auf die Warmumformbarkeit, Dauerfestigkeit und Zähigkeit deutlich reduziert. Um diesen Effekt auch bei einem erfindungsgemäßen Stahlflachprodukt zu nutzen, kann ein erfindungsgemäßes Stahlflachprodukt optional mindestens 0,0005 Gew.-% Ca, insbesondere mindestens 0,0010 Gew.-%, bevorzugt mindestens 0,0020 Gew.-% enthalten. Der maximale Ca-Gehalt beträgt 0,01 Gew.-%, insbesondere maximal 0,007 Gew.-%, bevorzugt maximal 0,005 Gew.-%. Bei zu hohen Ca-Gehalten wächst die Wahrscheinlichkeit, dass sich nichtmetallische Einschlüsse unter Beteiligung von Ca bilden, die den Reinheitsgrad des Stahles und auch seine Zähigkeit verschlechtern. Aus diesem Grund sollte eine Obergrenze des Ca-Gehalts von höchstens 0,005 Gew-%, vorzugsweise höchstens 0,003 Gew-%, eingehalten werden.

Wolfram (W) kann optional in Gehalten von 0,001 - 1,0 Gew.-% zur Verlangsamung der Ferritbildung hinzulegiert werden. Ein positiver Effekt auf die Härtbarkeit ergibt sich bereits bei W-Gehalten von mindestens 0,001 Gew.-%. Aus Kostengründen wird maximal 1,0 Gew.-%, insbesondere maximal 0,30 Gew.-% Wolfram hinzulegiert.

Optional weist der Stahl des erfindungsgemäßen Stahlflachproduktes einen Gehalt an Cer ("Ce") und Lanthan ("La") auf, der größer ist als 0,01 Gew.-%. Die Angabe Ce+La größer oder kleiner als ein bestimmter Wert bedeutet, dass in dem Stahl entweder Cer oder Lanthan vorhanden ist, oder dass Cer und Lanthan gleichzeitig vorhanden sind, wobei in allen drei Fällen gilt, dass die Summe der Gehalte von Cer und Lanthan größer oder kleiner als der bestimmte Wert sind. Daher ist

Ce+La: 0,01-0,03 Gew.-% so zu verstehen, dass in dem Stahl entweder Cer oder Lanthan vorhanden sind oder dass sowohl Cer und Lanthan vorhanden sind, wobei für die Summe der Gehalte an Cer und Lanthan gilt, dass sie im Bereich von 0,01-0,03 Gew.-% liegt. Bevorzugt beträgt der Gehalt von Ce+La mindestens 0,010 Gew.-%, insbesondere mindestens 0,015 Gew.-%. Weiterhin bevorzugt beträgt der Gehalt von Ce+La maximal 0,025 Gew.-%. Cer und Lanthan sind chemisch sehr ähnlich und haben daher einerseits die gleiche Wirkung im Stahl und sind andererseits analytisch nur sehr schwer zu unterscheiden. Daher ist es zweckdienlich lediglich die Summe der Gehalte von Cer und Lanthan zu betrachten. Im Weiteren wird daher auch gelegentlich auf "Cer/Lanthan" Bezug genommen, wenn die Zugabe von Cer und/oder Lanthan gemeint ist.

Es hat sich gezeigt, dass bereits die Zugabe von Ce+La in kleinen Mengen ab 0,01 Gew.-% sich positiv auf den Widerstand gegen Wasserstoffversprödung (und damit auf das Biegeverhalten) auswirkt. Durch die entsprechende Zugabe kommt es zur Bildung von effizienteren Wasserstofffallen. Untersuchungen haben gezeigt, dass dies unter anderem durch die Bildung von sphäroiden Oxisulfiden von Ce und/oder La (z.B. $Ce_2O_2S$) verursacht wird. Die Verbindungen von Ce und La bilden sich bereits bei sehr hohen Temperaturen und sind thermodynamisch sehr stabil. Sie sorgen so zudem über die Abbindung von Sauerstoff und Schwefel für geringere Mengen von $Al_2O_3$, MnS und ähnlichen Einschlüssen.

Bei zu hohen Gehalten an Ce+La kann es zum Zusetzen des Tauchrohrs beim Gießprozess kommen (sog. "Clogging"). Daher ist der Gehalt an Ce+La auf 0,03 Gew.-% begrenzt.

Bei einer bevorzugten Variante des Stahlflachproduktes sind die Elemente die Elemente Mo, Cr, Ti, V und Nb im Stahl vorhanden und es gilt für die Elementgehalte:

$$0.03 < (Mo \cdot Cr \cdot Ti \cdot V \cdot Nb)^{\frac{C}{5}} < 0,4$$

Die Elemente Mo, Cr, Ti, V, Nb sind die wesentlichen Bildner für die Ausscheidungen. Das hier angegebene geometrische Mittel der Gehalte (in Gew.-%) dieser Elemente eignet sich besonders, um die Überlagerung von Eigenschaften, die sich konzentrationsabhängig einem linearen Zusammenhang folgend verändern, zu beschreiben. Da außerdem der Kohlenstoffgehalt ebenfalls wich-tig für die Bildung der Karbide ist, eignet sich

$(Mo \cdot Cr \cdot Ti \cdot V \cdot Nb)^{\frac{C}{5}}$ besonders gut, um Karbidverteilungen zu beschreiben. Es hat sich gezeigt, dass sich besonders geeignete Karbidverteilungen einstellen, wenn die oben genannte Relation erfüllt ist.

Bei einer weiteren bevorzugten Variante des Stahlflachprodukt gilt für die Elementgehalte:

$$Ni + Cr \leq 1,1$$

Aufgrund von Gesundheitsbedenken und insbesondere der REACH Verordnung der europäischen Union sind die Gehalte an Ni und Cr gering zu halten. Daher ist vorteilhaft die obenstehende Relation erfüllt.

Das Stahlflachprodukt umfasst bevorzugt einen Korrosionsschutzüberzug auf mindestens einer Seite, um das Stahlsubstrat beim Warmumformen und bei der Verwendung des erzeugten Blechformteils vor Oxidation und Korrosion zu schützen.

Bei einer speziellen Ausführungsform umfasst das Stahlflachprodukt bevorzugt einen Korrosionsschutzüberzug auf Aluminium-Basis. Dabei kann der Korrosionsschutzüberzug einseitig oder beidseitig auf dem Stahlflachprodukt aufgebracht sein. Als die beiden Seiten des Stahlflachproduktes werden die beiden sich gegenüberliegenden großen Flächen des Stahlflachproduktes bezeichnet. Die schmalen Flächen werden als Kanten bezeichnet.

Ein solcher Korrosionsschutzüberzug wird bevorzugt durch Schmelztauchbeschichten des Stahlflachproduktes erzeugt. Dabei wird das Stahlflachprodukt durch eine flüssige Schmelze geführt, die aus 0,1 - 15 Gew.-% Si bevorzugt mehr als 1,0 Gew-% Si, optional 2 - 4 Gew.-% Fe, optional bis zu 5 Gew.-% Alkali- oder Erdalkalimetalle, bevorzugt bis zu

EP 4 610 381 A2

1,0 Gew.-% Alkali- oder Erdalkalimetalle, und optional bis zu 15 Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium besteht. Bevorzugt beträgt der optionale Gehalt an Alkali- oder Erdalkalimetallen mindestens 0,1 Gew.-%.

Bei einer bevorzugten Variante beträgt der Si-Gehalt der Schmelze 0,5 - 3,5 Gew.-% oder 7 - 12 Gew.-%, insbesondere 8-10 Gew.-%.

Bei einer bevorzugten Variante umfasst der optionale Gehalt an Alkali- oder Erdalkalimetallen in der Schmelze 0,1 - 1,0 Gew.-% Mg, insbesondere 0,1 - 0,7 Gew.-% Mg, bevorzugt 0,1 - 0,5 Gew.-% Mg. Weiterhin kann der optionale Gehalt an Alkali- oder Erdalkalimetallen in der Schmelze insbesondere mindestens 0,0015 Gew.-% Ca, insbesondere mindestens 0,01 Gew.-% Ca, umfassen. Weiterhin bevorzugt besteht der optionale Gehalt an Alkali- oder Erdalkalimetallen in der Schmelze aus 0,1 - 1,0 Gew.-% Mg, insbesondere 0,1 - 0,7 Gew.-% Mg, bevorzugt 0,1 - 0,5 Gew.-% Mg und optional mindestens 0,0015 Gew.-% Ca, insbesondere mindestens 0,01 Gew.-% Ca.

Beim Schmelztauchbeschichten diffundiert Eisen aus dem Stahlsubstrat in den flüssigen Überzug, so dass der Korrosionsschutzüberzug des Stahlflachproduktes beim Erstarren insbesondere eine Legierungsschicht und eine Al-Basisschicht aufweist.

Die Legierungsschicht liegt auf dem Stahlsubstrat auf und grenzt unmittelbar an dieses an. Die Legierungsschicht wird im Wesentlichen aus Aluminium und Eisen gebildet. Bevorzugt besteht die Legierungsschicht aus 25 - 50 Gew.-% Fe, 5 - 20 Gew.-% Si, optionalen weiteren Bestandteilen deren Gehalt in Summe auf höchstens 5,0 Gew.-%, bevorzugt 2,0 Gew.-%, beschränkt sind, und als Rest Aluminium. Die optionalen weiteren Bestandteile beinhalten insbesondere die übrigen Bestandteile der Schmelze (das heißt gegebenenfalls Alkali- oder Erdalkalimetalle, insbesondere Mg bzw. Ca) und die übrigen Anteile des Stahlsubstrates zusätzlich zu Eisen.

Bei einer weiteren Variante (Variante mit Si-Gehalt in der Schmelze von 0,5 - 3,5 Gew.-%) besteht die Legierungsschicht aus 25 - 50 Gew.-% Fe, 0,5 - 5,0 Gew.-% Si, optionalen weiteren Bestandteilen deren Gehalt in Summe auf höchstens 5,0 Gew.-%, bevorzugt 2,0 Gew.-%, beschränkt sind, und als Rest Aluminium. Die optionalen weiteren Bestandteile beinhalten auch hier insbesondere die übrigen Bestandteile der Schmelze (das heißt gegebenenfalls Alkali- oder Erdalkalimetalle, insbesondere Mg bzw. Ca) und die übrigen Anteile des Stahlsubstrates zusätzlich zu Eisen.

Bei einer bevorzugten Variante des Stahlflachproduktes gilt für den Dispersionsgrad $D_2$ von Ausscheidungen in der Legierungsschicht

$$25 \cdot 10^{-6} \frac{1}{nm} < D_2 < 5 \cdot 10^{-3} \frac{1}{nm}$$

Bei den Ausscheidungen handelt es sich insbesondere um Karbide und/oder Karbonitride von einem oder mehreren der Elemente aus der Gruppe Vanadium, Titan, Niob, Chrom und Molybdän.

Durch die Einstellung der Ausscheidungen im Stahlsubstrat des Stahlflachproduktes ergibt sich, dass ebenfalls in der, bevorzugt ferritischen, Legierungsschicht ein entsprechender Dispersionsgrad $D_2$ vorliegt. Auch hier wirken die Ausscheidungen als Fallen für den freien Wasserstoff. Von außen eindringender freier Wasserstoff wird also an den Ausscheidungen lokalisiert. Damit sammelt sich der freie Wasserstoff in der Legierungsschicht. Diese ist bevorzugt ferritisch und damit weicher als das Stahlsubstrat. Es kommt also nicht so schnell zu Wasserstoffversprödung, da sich der freie Wasserstoff in der weicheren Legierungsschicht sammelt und nicht in das sprödere Stahlsubstrat eintritt.

Die Al-Basisschicht liegt auf der Legierungsschicht und grenzt unmittelbar an diese an. Bevorzugt entspricht die Zusammensetzung der Al-Basisschicht der Zusammensetzung der Schmelze des Schmelzbades. Das heißt, sie besteht aus 1,0 - 15 Gew.-% Si, optional 2 - 4 Gew.-% Fe, optional bis zu 5 Gew.-% Alkali- oder Erdalkalimetalle, bevorzugt bis zu 1,0 % Gew.- Alkali- oder Erdalkalimetalle, optional bis zu 15 Gew.-% Zn und optionalen weiteren Bestandteilen, deren Gehalte in Summe auf höchstens 2,0 Gew.-% beschränkt sind, und als Rest Aluminium. Bevorzugte Zusammensetzungen der Al-Basisschicht entsprechen den bevorzugten Schmelzenzusammensetzungen.

Bei einer bevorzugten Variante der Al-Basisschicht umfasst der optionale Gehalt an Alkali- oder Erdalkalimetallen 0,1 - 1,0 Gew.-% Mg, insbesondere 0,1 - 0,7 Gew.-% Mg, bevorzugt 0,1 - 0,5 Gew.-% Mg. Weiterhin kann der optionale Gehalt an Alkali- oder Erdalkalimetallen in der Al-Basisschicht insbesondere mindestens 0,0015 Gew.-% Ca, insbesondere mindestens 0,1 Gew.-% Ca, umfassen. Weiterhin bevorzugt besteht der optionale Gehalt an Alkali- oder Erdalkalimetallen aus 0,1 - 1,0 Gew.-% Mg, insbesondere 0,1 - 0,7 Gew.-% Mg, bevorzugt 0,1 - 0,5 Gew.-% Mg und optional mindestens 0,0015 Gew.-% Ca, insbesondere mindestens 0,1 Gew.-% Ca.

Bei einer weiter bevorzugten Variante des Korrosionsschutzüberzuges ist der Si-Gehalt in der Legierungsschicht geringer als der Si-Gehalt in der Al-Basisschicht.

Der Korrosionsschutzüberzug hat bevorzugt eine Dicke von 5 - 60 μm, insbesondere von 10 bis 40 μm. Das Auflagengewicht des Korrosionsschutzüberzuges beträgt insbesondere $30 - 360 \frac{g}{m^2}$ bei beidseitigen Korrosionsschutzüberzügen bzw. $15 - 180\frac{g}{m^2}$ bei der einseitigen Variante. Bevorzugt beträgt das Auflagengewicht des Korrosionsschutzüberzuges $100 - 200\frac{g}{m^2}$ bei beidseitigen Überzügen bzw. $50 - 100\frac{g}{m^2}$ für einseitige Überzüge. Besonders bevorzugt beträgt das Auflagengewicht des Korrosionsschutzüberzuges $120 - 180\frac{g}{m^2}$ bei beidseitigen Überzügen bzw. $60 - 90\frac{g}{m^2}$ für einseitige Überzüge.

Die Dicke der Legierungsschicht ist bevorzugt kleiner als 20 μm, besonders bevorzugt kleiner 16 μm, besonders bevorzugt kleiner 12 μm, insbesondere kleiner 10 μm. Die Dicke der Al-Basisschicht ergibt sich aus der Differenz der Dicken von Korrosionsschutzüberzug und Legierungsschicht. Bevorzugt beträgt die Dicke der Al-Basisschicht auch bei dünnen Korrosionsschutzüberzügen mindestens 1 μm.

Bei einer bevorzugten Variante umfasst das Stahlflachprodukt eine auf dem Korrosionsschutzüberzug angeordnete Oxidschicht. Die Oxidschicht liegt dabei insbesondere auf der Al-Basisschicht und bildet bevorzugt den äußeren Abschluss des Korrosionsschutzüberzuges.

Die Oxidschicht besteht insbesondere zu mehr als 80 Gew.-% aus Oxiden, wobei der Hauptanteil der Oxide (d. h. mehr als 50 Gew.-% der Oxide) Aluminiumoxid ist. Optional sind in der Oxidschicht zusätzlich zu Aluminiumoxid Hydroxide und / oder Magnesiumoxid allein oder als Mischung vorhanden. Bevorzugt besteht der der nicht von den Oxiden und optional vorhandenen Hydroxiden eingenommene Rest der Oxidschicht aus Silizium, Aluminium, Eisen und/oder Magnesium in metallischer Form. Für die optionale Ausführungsform mit Zink als Bestandteil der Al-Basisschicht sind auch Zinkoxidbestanddteile in der Oxidschicht vorhanden.

Bevorzugt hat die Oxidschicht des Stahlflachproduktes eine Dicke, die größer ist als 50 nm. Insbesondere beträgt die Dicke der Oxidschicht maximal 500 nm.

Bei einer alternativen Ausgestaltung umfasst das Stahlflachprodukt einen Korrosionsschutzüberzug auf Zink-Basis. Dabei kann der Korrosionsschutzüberzug einseitig oder beidseitig auf dem Stahlflachprodukt aufgebracht sein. Als die beiden Seiten des Stahlflachproduktes werden die beiden sich gegenüberliegenden großen Flächen des Stahlflachproduktes bezeichnet. Die schmalen Flächen werden als Kanten bezeichnet.

Ein solcher Korrosionsschutzüberzug auf Zink-Basis umfasst bevorzugt 0,2 - 6,0 Gew.-% Al, 0,1 - 10,0 Gew.-% Mg, optional 0,1 - 40 Gew.-% Mangan oder Kupfer, optional 0,1 - 10,0 Gew.-% Cer, optional höchstens 0,2 Gew.-% weitere Elemente, unvermeidbare Verunreinigung und als Rest Zink. Insbesondere beträgt der Al-Gehalt maximal 2,0 Gew.-%, bevorzugt maximal 1,5 Gew.-%. Der Mg-Gehalt beträgt insbesondere maximal 3,0 Gew.-%, bevorzugt maximal 1,0 Gew.-%. Der Korrosionsschutzüberzug kann durch Schmelztauchbeschichten oder durch physikalische Gasphasenabscheidung oder durch elektrolytische Verfahren aufgebracht werden.

Die vorstehenden Erläuterungen zu Elementgehalten und deren bevorzugten Grenzen gelten entsprechend für das im Folgenden beschriebene Verfahren zum Herstellen eines Stahlflachproduktes, für das Blechformteil und für das Verfahren zur Herstellung eines Blechformteiles.

Das erfindungsgemäße Verfahren zum Herstellen eines Stahlflachproduktes für die Warmumformung mit einem Korrosionsschutzüberzug umfasst folgende Arbeitsschritte:

a) Zurverfügungstellen einer Bramme oder einer Dünnbramme, die aus Stahl, der neben Eisen und unvermeidbaren Verunreinigungen (in Gew.-%) aus

| | |
|---|---|
| C: | 0,25-0,8 %, |
| Si: | 0,01 - 2,0 %, |
| Al: | 0,001 - 1,0 %, |
| B: | 0,0005 - 0,01%, |
| P: | ≤ 0,03 %, |
| S: | ≤ 0,02 %, |
| N: | ≤ 0,03 %, |
| Sn: | ≤ 0,03 %, |
| As: | ≤ 0,01 %, |
| Sb: | ≤ 0,02 %, |

mindestens eines der Elemente aus der Gruppe umfassend Ti, Nb und V mit der Maßgabe, dass für die Gehalte gilt:

| | |
|---|---|
| Ti: | 0,008 - 0,10 %, |

(fortgesetzt)

| | |
|---|---|
| Nb: | 0,01 - 0,07 %, |
| V: | 0,01 - 0,4%, |

sowie optional einem oder mehreren der Elemente "Cr, Mn, Co, Cu, Mo, Ni, Ca, W, Ce, La" in folgenden Gehalten:

| | |
|---|---|
| Cr: | 0,01 - 1,0 %, |
| Mn: | 0,01 - 3,5 %, |
| Co: | 0,05 - 1,0 %, |
| Cu: | 0,01 - 0,2 %, |
| Mo: | 0,002 - 1,0 %, |
| Ni: | 0,01 - 2,0 %, |
| Ca: | 0,0005 - 0,01 %, |
| W: | 0,001 - 1,0 %, |
| Ce+La: | 0,01 - 0,03 %, |

besteht;

b) Durcherwärmen der Bramme oder Dünnbramme bei einer Temperatur (T1) von 1100 - 1400 °C;

c) Vorwalzen der durcherwärmten Bramme oder Dünnbramme zu einem Vorband mit einer Vorbandtemperatur (T2) von 800 - 1200 °C;

d) Warmwalzen des Vorband zu einem warmgewalzten Stahlflachprodukt mittels einer Walzstraße, wobei vor und während des Warmwalzens des Vorband die lokale Temperatur des Vorbandes so eingestellt wird, dass die Temperaturen der einzelnen Abschnitte des Vorbandes beim Warmwalzen um nicht mehr als 60 K variieren und wobei die Endwalztemperatur (T3) 750 - 910 °C beträgt;

e) Abkühlen des warmgewalzten Stahlflachprodukt auf eine Haspeltemperatur (T4) von 500 - 670 °C;

f) Haspeln des warmgewalzten Stahlflachprodukts;

g) Entzundern des warmgewalzten Stahlflachprodukts;

h) optionales Kaltwalzen des Stahlflachprodukts, wobei der Kaltwalzgrad mindestens 30 % beträgt;

i) Glühen des Stahlflachprodukts bei einer Glühtemperatur (T5) von 650 - 900 °C;

j) Abkühlen des Stahlflachprodukts auf eine Zwischentemperatur (T6), welche 650 - 800 °C, bevorzugt 670 - 800 °C beträgt;

k) Optionales Beschichten des auf die Zwischentemperatur abgekühlten Stahlflachprodukts mit einem Korrosionsschutzüberzug durch Schmelztauchbeschichten in einem Schmelzenbad mit einer Schmelzentemperatur (T7) 660 - 800 °C, bevorzugt 680 - 740 °C;

l) Abkühlen des Stahlflachprodukts auf Raumtemperatur, wobei die erste Abkühldauer $t_{mT}$ im Temperaturbereich zwischen 600 °C und 450 °C mehr als 10 s, insbesondere mehr als 14 s beträgt und die zweite Abkühldauer $t_{nT}$ im Temperaturbereich zwischen 400 °C und 300 °C mehr als 8 s, insbesondere mehr als 12 s beträgt;

m) optionales Dressieren des Stahlflachprodukts.

In Arbeitsschritt a) wird eine entsprechend der erfindungsgemäß für das Stahlflachprodukt vorgegebenen Legierung zusammengesetzte Bramme oder Dünnbramme zur Verfügung gestellt. Dies geschieht mittels konventionellen Brammenstrangguss oder Dünnbrammenstrangguss.

In Arbeitsschritt b) wird die Bramme oder Dünnbramme bei einer Temperatur (T1) von 1100 - 1400 °C durcherwärmt. Sollte die Bramme oder Dünnbramme nach dem Vergießen abgekühlt sein, so wird sie zum Durcherwärmen zunächst auf 1100 - 1320 °C wiedererwärmt. Die Durcherwärmungstemperatur sollte mindestens 1100 °C betragen, um eine gute Verformbarkeit für den nachfolgenden Walzprozess sicherzustellen. Bevorzugt beträgt die Durcherwärmungstemperatur (T1) mindestens 1200 °C, bevorzugt mindestens 1250 °C. Die Durcherwärmungstemperatur sollte nicht mehr als 1320 °C betragen, bevorzugt nicht mehr als 1300 °C. Hierdurch werden einerseits Anteile schmelzflüssiger Phasen in der Bramme oder Dünnbramme vermieden. Andererseits hat sich gezeigt, dass die Dispersion $D_1$ der Ausscheidungen zu hoch ist, wenn auf höhere Temperaturen durcherwärmt wird. Weiterhin führt eine höhere Temperatur zu noch weiter zunehmenden Reaktionen mit der Umgebung (z. B. Abkohlung im oberflächennahen Bereich). Ebenso kommt es zu Kornwachstum in der Bramme und daraufhin zu schlechteren und ungleichmäßigeren Eigenschaften des Produktes. Zudem würde die dabei auftretende höhere Verzunderung auch noch das Ausbringen verringern.

Im Arbeitsschritt c) wird die Bramme oder Dünnbramme zu einem Vorband vorgewalzt. In diesem Fall sollte die Temperatur des Vorbandes (T2) am Ende des Vorwalzens mindestens 800 °C betragen, damit das Zwischenprodukt genügend Wärme für den nachfolgenden Arbeitsschritt des Fertigwalzens enthält. Hohe Walztemperaturen können jedoch auch ein Kornwachstum während des Walzvorgangs fördern, was sich nachteilig auf die mechanischen Eigenschaften des Stahlflachprodukts auswirkt. Um das Kornwachstum während des Walzvorgangs gering zu halten, soll die Temperatur des Zwischenprodukts am Ende des Vorwalzens nicht mehr als 1200 °C betragen. Bevorzugt beträgt die Vorbandtemperatur (T2) mindestens 850 °C. Weiterhin bevorzugt beträgt die Vorbandtemperatur maximal 1150 °C, insbesondere maximal 1100 °C, bevorzugt maximal 1050 °C. Als Vorbandtemperatur (T2) wird im Sinne dieser Anmeldung Temperatur bezeichnet, die der Anfang des Vorbandes beim Eintritt in die (nachfolgende) Walzstraße aufweist.

In Arbeitsschritt d) wird das Vorband mittels einer Walzstraße zu einem warmgewalzten Stahlflachprodukt gewalzt. Bevorzugt beginnt das Fertigwalzen spätestens 90 s nach dem Ende des Vorwalzens. Vor und während des Warmwalzens des Vorband wird die lokale Temperatur des Vorband so eingestellt, dass die Temperaturen der einzelnen Abschnitte des Vorbandes beim Warmwalzen um nicht mehr als 60 K variieren. In der Literatur wurde bisher nur eine Temperatur für das Warmwalzen angegeben. Dabei handelt es sich entweder um die Temperatur, die der Anfang des Vorbandes beim Warmwalzen aufweist, oder um eine mittlere Temperatur des Vorbandes beim Warmwalzen. Da die Bänder jedoch eine signifikante Länge haben, kann es zu großen Temperaturdifferenzen entlang des Vorbandes kommen. Selbst wenn ein auf eine bestimmte Temperatur gleichmäßig temperiertes Vorband in die Walzstraße einläuft, so wird lediglich der Anfang des Vorbandes mit dieser Temperatur gewalzt. Während der Anfang des Vorbandes gewalzt wird, kommt es in den stromaufwärtsliegenden Abschnitten des Vorbandes bereits zu einer signifikanten Abkühlung. Dieser Effekt ist grundsätzlich bekannt und führt zu einer Erhöhung der erforderlichen Walzkraft während des Fertigwalzen aufgrund der absinkenden Temperatur und damit einem Ansteigen der Festigkeit. Derartige Variationen sind bei modernen Walzgerüste jedoch unproblematisch realisierbar, so dass es bislang nicht erforderlich schien dies zu kompensieren. Erfindungsgemäß wurde jedoch erkannt, dass sich dieser Effekt sich auch auf finalen Werkstoffeigenschaften auswirken kann. So ergibt sich beim bekannten Fertigwalzen eines homogen temperierten Vorbandes zwangsläufig nach dem Fertigwalzen ein Temperaturgradient entlang des Stahlflachproduktes (auch als Fertigband bezeichnet). Dies liegt daran, dass das Vorband vor dem Walzen deutlich dicker ist und demnach langsamer abkühlt als das Fertigband nach dem Walzen. Während also der Anfang des Bandes als erstes gewalzt wird und anschließend sofort als Fertigband schnell abkühlt, wird das Ende des Bandes als letztes gewalzt und kühlt daher zunächst langsam ab, bis er gewalzt wird. Der Anfang des Bandes und das Ende des Bandes erfahren also eine unterschiedliche Temperaturführung. Überraschenderweise wirkt sich dies auf die finalen Eigenschaften des gesamten Bandes aus. Der Grund liegt vermutlich darin, dass die Temperaturverteilung entlang des Bandes beim nachfolgenden Haspeln zu einem Temperaturgradient entlang des Coilradius führt, was wiederum das Abkühlverhalten des Coils beeinflusst. Im Ergebnis kommt es zu einer Verteilung der Ausscheidungen mit einer Dispersion $D_1$ außerhalb des gewünschten Bereiches, der vorteilhaft für die Reduzierung des freien Wasserstoffs ist.

Die oben genannten Probleme werden erfindungsgemäß gelöst, indem vor und während des Warmwalzens des Vorband die lokale Temperatur des Vorbandes so eingestellt wird, dass die Temperaturen der einzelnen Abschnitte des Vorbandes beim Warmwalzen um nicht mehr als 60 K variieren. Gemeint ist jeweils die Temperatur, die jeder Abschnitt des Vorbandes aufweist, zu dem Zeitpunkt, in dem dieser Abschnitt gewalzt wird.

Durch diese Temperierung wird erreicht, dass jeder Abschnitt des Vorbandes, wenn er gewalzt wird im Wesentlichen die gleiche Temperatur aufweist. Dies führt dazu, dass jeder Abschnitt des Vorbandes ab diesem Punkt auch die gleiche Temperaturführung erfährt. Im Ergebnis stellt sich hierdurch die gewünschte Verteilung der Ausscheidungen ein.

Die lokale Einstellung der Temperatur kann durch verschiedene Temperiermaßnahmen erfolgen. Mögliche Temperiermaßnahmen umfassen:

- Thermische Isolierung des Vorbandes vor der Walzstraße, bevorzugt durch Führen des Vorbandes durch einen umhausten Bereich;

- Abschnittsweises Nacherwärmen des Vorbandes.

Die thermische Isolierung des Vorbandes vor der Walzstraße wird bevorzugt durch das Führen des Vorbandes durch einen umhausten Bereich realisiert. Dabei wird ein Bereich des Bandlaufes vor der Walzstraße mittels einer Umhausung thermisch isoliert, um die Abkühlung des Vorbandes in diesem Bereich zu verringern. Bei geringen Abkühlungen kommt es aufgrund der hohen Wärmeleitfähigkeit des Bandes dann zu einer relativ homogenen Temperatur, so dass die Variation geringer ist als 60 K. Der umhauste Bereich kann linear sein oder aus mehreren linearen Segmenten bestehen. Alternativ kann dies auch in der Form realisiert werden, dass das Vorband zunächst spiralförmig aufgerollt wird und diese Spirale innerhalb einer thermischen Isolierung gehalten wird, um Temperaturunterschiede auszugleichen.

Das abschnittsweise Nacherwärmen des Vorbandes kann insbesondere folgendermaßen realisiert werden:

- Lokales, insbesondere induktives, Nacherwärmen des Vorbandes vor der Walzstraße;

- Variation der Umformgeschwindigkeit beim Vorwalzen oder Warmwalzen, so dass die durch die Umformung eingebrachte Energie variiert.

Es ist bekannt, dass durch Walzen nicht nur die Dicke eines Bandes reduziert wird, sondern auch lokal Wärmeenergie eingebracht wird. Dabei hängt die eingebrachte Wärmeenergie von der Umformgeschwindigkeit beim Walzen ab. Durch eine Variation der Umformgeschwindigkeit entlang des Bandes kann somit gezielt mehr Wärmeenergie in einzelnen Abschnitten des Bandes eingebracht werden. Vorliegend kann also beispielsweise die Umformgeschwindigkeit beim Vorwalzen variiert werden, um gezielt eine Temperaturverteilung aufzubringen, die das spätere Abkühlverhalten kompensiert und auf diese Weise dafür sorgt, dass beim Warmwalzen die Temperaturen nicht zu stark variieren. Ebenso kann auch die Umformgeschwindigkeit direkt beim Warmwalzen variiert werden, um das vorherige Abkühlverhalten zu kompensieren.

Bei der thermischen Isolierung des Vorbandes vor der Walzstraße, beim lokalen Nacherwärmen des Vorbandes vor der Walzstraße und bei der Variation der Umformgeschwindigkeit beim Vorwalzen wird erreicht, dass das Vorband bereits beim Eintritt in die Walzstraße eine relativ homogene Temperatur aufweist. Also, die Temperaturen der einzelnen Abschnitte des Vorbandes beim Eintritt in die Walzstraße um nicht mehr als 60 K variieren. Gemeint ist dabei die lokale Temperatur entlang des vorbeilaufenden Vorbandes an einem festen Punkt, nämlich dem Eintritt in die Walzstraße.

Dagegen wird durch die Variation der Umformgeschwindigkeit beim Warmwalzen erreicht, dass direkt während des Warmwalzens die inhomogene Temperaturverteilung zumindest teilweise kompensiert wird.

Die Endwalztemperatur (T3), das heißt die Temperatur des fertig warmgewalzten Stahlflachprodukts am Ende des Warmwalzvorgangs, beträgt 750 - 910 °C. Bevorzugt beträgt die Endwalztemperatur (T3) mindestens 800 °C, insbesondere mindestens 825 °C. Die Endwalztemperatur ist auf Werte von höchstens 910 °C begrenzt, um einer Vergröberung der Austenitkörner vorzubeugen. Außerdem sind Endwalztemperaturen von höchstens 910 °C prozesstechnisch relevant zur Einstellung von Haspeltemperaturen (T4) kleiner 670 °C.

Bei einer bevorzugten Variante beträgt das Verhältnis T2/T3 von Vorbandtemperatur T2 zu Endwalztemperatur T3 mindestens 1,0. Weiterhin bevorzugt beträgt das Verhältnis T2/T3 maximal 1,35, bevorzugt maximal 1,25, insbesondere maximal 1,15.

Im nachfolgenden Schritt e) erfolgt ein Abkühlen des warmgewalzten Stahlflachprodukt auf eine Haspeltemperatur (T4) von 500 - 670 °C.

Arbeitsschritt f) sieht ein Haspeln des warmgewalzten Stahlflachprodukts vor. Dazu wird das Stahlflachprodukt nach dem Warmwalzen insbesondere innerhalb von weniger als 50 s auf eine Haspeltemperatur (T4) abgekühlt. Als Kühlmedium kann hierfür beispielsweise Wasser, Luft oder eine Kombination aus beidem verwendet werden. Die Haspeltemperatur (T4) sollte höchstens 670 °C, bevorzugt höchstens 650 °C betragen. Die Haspeltemperatur ist prinzipiell nicht nach unten beschränkt. Allerdings haben sich Haspeltemperaturen von mindestens 550 °C als günstig für die Kaltwalzbarkeit erwiesen. Anschließend wird das gehaspelte Stahlflachprodukt in konventioneller Weise an Luft auf Raumtemperatur abgekühlt.

In Arbeitsschritt g) wird das warmgewalzte Stahlflachprodukt in konventioneller Weise durch Beizen oder durch eine andere geeignete Behandlung entzundert.

Das von Zunder gereinigte warmgewalzte Stahlflachprodukt kann vor der Glühbehandlung in Arbeitsschritt h) optional einem Kaltwalzen unterzogen werden, um beispielsweise höhere Anforderungen an die Dickentoleranzen des Stahlflachprodukts zu erfüllen. Der Kaltwalzgrad (KWG) sollte dabei mindestens 30 % betragen, um in das Stahlflachprodukt genügend Verformungsenergie für eine schnelle Rekristallisation einzubringen. Unter dem Kaltwalzgrad KWG wird dabei der Quotient aus der Dickenabnahme beim Kaltwalzen $\Delta$dKW durch die Warmbanddicke d verstanden:

$$KWG = \Delta dKW/d$$

mit $\Delta$dKW = Dickenabnahme beim Kaltwalzen in mm und d = Warmbanddicke in mm, wobei sich die Dickenabnahme $\Delta$dKW aus der Differenz der Dicke des Stahlflachprodukts vor dem Kaltwalzen zur Dicke des Stahlflachprodukts nach dem Kaltwalzen ergibt. Beim Stahlflachprodukt vor dem Kaltwalzen handelt es sich üblicherweise um ein Warmband der Warmbanddicke d. Das Stahlflachprodukt nach dem Kaltwalzen wird üblicherweise auch als Kaltband bezeichnet. Der Kaltwalzgrad kann prinzipiell sehr hohe Werte von über 90 % annehmen. Allerdings haben sich Kaltwalzgrade von höchstens 80 % als günstig zur Vermeidung von Bandrissen erwiesen.

Nachfolgend wird das weitere Verfahren zunächst in einer ersten Variante beschrieben, bei der das Stahlflachprodukt beschichtet wird:

In Arbeitsschritt i) wird das Stahlflachprodukt einer Glühbehandlung bei Glühtemperaturen (T5) von 650 - 900 °C unterzogen. Dazu wird das Stahlflachprodukt zunächst innerhalb von 10 bis 120 s auf die Glühtemperatur erwärmt und dann 30 bis 600s bei der Glühtemperatur gehalten. Die Glühtemperatur beträgt mindestens 650 °C, bevorzugt mindestens 720 °C. Glühtemperaturen oberhalb von 900 °C sind aus ökonomischen Gründen nicht wünschenswert.

In Arbeitsschritt j) wird das Stahlflachprodukt nach dem Glühen auf eine Zwischentemperatur (T6) abgekühlt, um es für die anschließende Beschichtungsbehandlung vorzubereiten. Die Zwischentemperatur T6 kann auch als Eintauchtemperatur T6 bezeichnet werden. Die Zwischentemperatur ist kleiner als die Glühtemperatur und wird auf die Temperatur des Schmelzbads (T7) abgestimmt. Die Zwischentemperatur beträgt 600 - 800 °C, bevorzugt mindestens 660 °C, besonders bevorzugt mindestens 670 °C, besonders bevorzugt höchstens 740 °C, insbesondere höchstens 700 °C. Für eine besonders homogene Grenzschichtausbildung ist es wichtig, dass genügend thermische Energie in der Grenzschicht zwischen Stahlsubstrat und Aluminiumschmelze vorliegt. Dies ist bei tieferen Temperaturen als 600 °C nicht der Fall, sodass sich unerwünschte Verbindungen bilden können, deren spätere Rückumwandlung zu Poren führen können. Ab den bevorzugten Zwischentemperaturen erhöht sich die Diffusionsgeschwindigkeit von Eisen in Aluminium nochmals signifikant, sodass bereits zu Beginn des Überzugsprozesses vermehrt Eisen in die noch flüssige Grenzschicht eindiffundieren kann. Die Dauer der Abkühlung des geglühten Stahlflachprodukts von der Glühtemperatur T5 auf die Zwischentemperatur T6 beträgt bevorzugt 10 - 180s. Insbesondere weicht die Zwischentemperatur T6 von der Temperatur des Schmelzenbades T7 um nicht mehr als 30K, insbesondere nicht mehr als 20K, bevorzugt nicht mehr als 10 K ab.

Das Stahlflachprodukt wird in Arbeitsschritt k) einer Beschichtungsbehandlung unterzogen. Die Beschichtungsbehandlung erfolgt bevorzugt mittels kontinuierlichem Schmelztauchbeschichten. Die Beschichtung kann nur auf einer Seite, auf beiden Seiten oder auf allen Seiten des Stahlflachprodukts aufgebracht werden. Die Beschichtungsbehandlung erfolgt bevorzugt als Schmelztauchbeschichtungsprozess, insbesondere als kontinuierlicher Prozess. Dabei kommt das Stahlflachprodukt üblicherweise auf allen Seiten mit dem Schmelzbad in Kontakt, sodass es allseits beschichtet wird. Das Schmelzbad, das die auf das Stahlflachprodukt aufzubringende Legierung in flüssiger Form enthält, weist typischerweise eine Temperatur (T7) von 660 - 800 °C, bevorzugt 680 - 740°C auf. Als zum Beschichten alterungsbeständiger Stahlflachprodukte mit einem Korrosionsschutzüberzug besonders geeignet haben sich Legierungen auf Aluminiumbasis erwiesen. In einem solchen Fall enthält das Schmelzbad 0,1 - 15 Gew.-% Si bevorzugt mehr als 1,0%, optional 2 - 4 Gew.-% Fe, optional bis zu 5 Gew.-% Alkali- oder Erdalkalimetalle, bevorzugt bis zu 1,0% Gew.-% Alkali- oder Erdalkalimetalle, und optional bis zu 15 % Zn und optionalen weiteren Bestandteilen, deren Gehalte in Summe auf höchstens 2,0 Gew.-% beschränkt sind, und als Rest Aluminium. Bei einer bevorzugten Variante beträgt der Si-Gehalt der Schmelze 1,0 - 3,5 Gew.-% oder 7 - 12 Gew.-%, insbesondere 8 - 10 Gew.-%. Bei einer bevorzugten Variante umfasst der optionale Gehalt an Alkali- oder Erdalkalimetallen in der Schmelze 0,1 - 1,0 Gew.-% Mg, insbesondere 0,1 - 0,7 Gew.-% Mg, bevorzugt 0,1 - 0,5 Gew.-% Mg. Weiterhin kann der optionale Gehalt an Alkali- oder Erdalkalimetallen in der Schmelze insbesondere mindestens 0,0015 Gew.-% Ca, insbesondere mindestens 0,01 Gew.-% Ca, umfassen. Weitere Varianten der Schmelze wurden obenstehend im Zusammenhang mit dem Stahlflachprodukt erläutert.

Nach der Beschichtungsbehandlung wird das beschichtete Stahlflachprodukt in Arbeitsschritt l) auf Raumtemperatur abgekühlt. Dabei beträgt eine erste Abkühldauer $t_{mT}$ im Temperaturbereich zwischen 600 °C und 450 °C (mittlerer Temperaturbereich mT) mehr als 10s, insbesondere mehr als 14s beträgt und eine zweite Abkühldauer $t_{nT}$ im Temperaturbereich zwischen 400 °C und 300 °C (niedriger Temperaturbereich nT) mehr als 8 s, insbesondere mehr als 12 s.

Dabei kann die erste Abkühldauer $t_{mT}$ im Temperaturbereich zwischen 600 °C und 450 °C (mittlerer Temperaturbereich mT) realisiert sein durch ein langsames, kontinuierliches Abkühlen oder auch durch ein Halten bei einer Temperatur für eine gewisse Zeit in diesem Temperaturbereich. Möglich ist sogar ein Zwischenheizen. Wichtig ist lediglich, dass das Stahlflachprodukt mindestens für eine Zeitdauer Abkühldauer $t_{mT}$ im Temperaturbereich zwischen 600 °C und 450 °C bleibt. In diesem Temperaturbereich liegt zum einen eine signifikante Diffusionsgeschwindigkeit von Eisen in Aluminium vor und zum anderen ist die Diffusion von Aluminium in Stahl gehemmt, da die Temperatur unter der halben Schmelztemperatur von Stahl liegt. Dies ermöglicht eine Diffusion von Eisen in den Korrosionsschutzüberzug ohne starke Diffusion von Aluminium in das Stahlsubstrat.

Die Diffusion von Eisen in den Korrosionsschutzüberzug hat gleich mehrere Vorteile:
Zum einen wird das Aufschmelzen des Korrosionsschutzüberzugs beim Austenitisieren vor dem Presshärten verzögert. Zum anderem kommt zu einer Homogenisierung der Wärmeausdehnungskoeffizienten von Korrosionsschutzüberzug und Substrat. Das heißt der Übergangsbereich zwischen Wärmeausdehnungskoeffizient Substrat und Oberfläche wird breiter, was die thermischen Spannungen beim Wiederaufheizen reduziert.

Gleichzeitig hätte das Eindiffundieren von Aluminium in das Stahlsubstrat erhebliche Nachteile: Durch die sehr hohe Affinität von Aluminium zu Stickstoff kann ein hoher Aluminium-Gehalt dazu führen, dass sich Stickstoff aus feinen Ausscheidungen, wie Niobkarbonitriden oder Titankarbonitriden löst und sich stattdessen grobe Ausscheidungen, wie Aluminiumnitride, bevorzugt auf den Korngrenzen bilden. Diese würden die Crashperformance verschlechtern wie auch den Biegewinkel verringern. Außerdem destabilisiert dies die feinen Ausscheidungen (z.B. die Niob-haltigen Ausscheidungen) im obersten Substratbereich, welche erfindungsgemäß wichtig sind für die Reduzierung des freien Wasserstoffes. Weiterhin würde die inhomogene Diffusionsgeschwindigkeit von Aluminium im Stahlsubstrat in Ferrit gegenüber Perlit/Bainit/Martensit zu einer ungleichmäßigen Verteilung von Al in der Randschicht des Stahlsubstrats führen. Dies sollte ebenfalls zur Verbesserung der Crash- und Biegeperformance verhindert werden. Diese Nachteile des Eindiffundierens von Aluminium in das Stahlsubstrat werden durch Hemmung daher reduziert oder vermieden.

Durch die bevorzugte erste Abkühldauer $t_{mT}$ (mehr als 14 s) nimmt die Eisenkonzentration in der Übergangsgrenzschicht so weit zu, dass sich dadurch die Aktivität von Aluminium im Überzug direkt an der Substratgrenze weiter verringert. Dies führt dann zu einer noch weiter verringerten Aluminiumaufnahme ins Substrat bei der Austenitisierung vor dem Presshärten mit den damit verbundenen oben beschriebenen Vorteilen.

Die zweite Abkühldauer $t_{nT}$ im Temperaturbereich zwischen 400 °C und 300 °C (niedriger Temperaturbereich nT) kann ebenfalls realisiert sein durch ein langsames, kontinuierliches Abkühlen oder auch durch ein Halten bei einer Temperatur für eine gewisse Zeit in diesem Temperaturbereich. Möglich ist sogar ein Zwischenheizen. Wichtig ist lediglich, dass das Stahlflachprodukt mindestens für eine Zeitdauer Abkühldauer $t_{nT}$ im Temperaturbereich zwischen 400 °C und 300 °C bleibt.

Bei der bevorzugten zweite Abkühldauer $t_{nT}$ von mehr als 12 s bilden sich zudem sehr feine Eisenkarbide (sogenannte Übergangskarbide), welche sich beim Austenitisieren wiederum sehr schnell auflösen und zu zusätzlichen Austenitkeimen und somit einem noch feineren Austenitgefüge und damit auch Härtungsgefüge führen.

Das beschichtete Stahlflachprodukt kann optional im nachfolgenden Schritt m) einem Dressieren mit einem Dressiergrad von bis zu 2 % unterzogen werden, um die Oberflächenrauheit des Stahlflachprodukts zu verbessern.

Alternativ zu der beschriebenen Verfahrensvariante kann das Stahlflachprodukt auch in einer unbeschichteten Variante hergestellt werden. Dann sind die Verfahrensschritte i)-m) wie folgt ausgestaltet:

In Arbeitsschritt i) wird das Stahlflachprodukt einer Glühbehandlung bei Glühtemperaturen (T5) von 650 - 900 °C unterzogen. Dazu wird das Stahlflachprodukt zunächst innerhalb von 10 bis 120 s auf die Glühtemperatur erwärmt und dann 30 bis 600 s bei der Glühtemperatur gehalten. Die Glühtemperatur beträgt mindestens 650 °C, bevorzugt mindestens 720 °C. Glühtemperaturen oberhalb von 900 °C sind aus ökonomischen Gründen nicht wünschenswert.

In Arbeitsschritt j) wird das Stahlflachprodukt nach dem Glühen auf eine Zwischentemperatur (T6) abgekühlt. Die Dauer der Abkühlung des geglühten Stahlflachprodukts von der Glühtemperatur T5 auf die Zwischentemperatur T6 beträgt bevorzugt 10 - 180s.

Arbeitsschritt k) ist bei dieser unbeschichteten Variante nicht realisiert.

Anschließend wird das Stahlflachprodukt in Arbeitsschritt l) auf Raumtemperatur abgekühlt. Dabei beträgt eine erste Abkühldauer $t_{mT}$ im Temperaturbereich zwischen 600 °C und 450 °C (mittlerer Temperaturbereich mT) mehr als 10s, insbesondere mehr als 14 s beträgt und eine zweite Abkühldauer $t_{nT}$ im Temperaturbereich zwischen 400 °C und 300 °C (niedriger Temperaturbereich nT) mehr als 8 s, insbesondere mehr als 12 s.

Dabei kann die erste Abkühldauer $t_{mT}$ im Temperaturbereich zwischen 600 °C und 450 °C (mittlerer Temperaturbereich mT) realisiert sein durch ein langsames, kontinuierliches Abkühlen oder auch durch ein Halten bei einer Temperatur für eine gewisse Zeit in diesem Temperaturbereich. Möglich ist sogar ein Zwischenheizen. Wichtig ist lediglich, dass das Stahlflachprodukt mindestens für eine Zeitdauer Abkühldauer $t_{mT}$ im Temperaturbereich zwischen 600 °C und 450 °C bleibt.

Die zweite Abkühldauer $t_{nT}$ im Temperaturbereich zwischen 400 °C und 300 °C (niedriger Temperaturbereich nT) kann ebenfalls realisiert sein durch ein langsames, kontinuierliches Abkühlen oder auch durch ein Halten bei einer Temperatur für eine gewisse Zeit in diesem Temperaturbereich. Möglich ist sogar ein Zwischenheizen. Wichtig ist lediglich, dass das Stahlflachprodukt mindestens für eine Zeitdauer Abkühldauer $t_{nT}$ im Temperaturbereich zwischen 400 °C und 300 °C bleibt.

Bei der bevorzugten zweite Abkühldauer $t_{nT}$ von mehr als 12 s bilden sich zudem sehr feine Eisenkarbide (sogenannte Übergangskarbide), welche sich beim Austenitisieren wiederum sehr schnell auflösen und zu zusätzlichen Austenitkeimen und somit einem noch feineren Austenitgefüge und damit auch Härtungsgefüge führen.

Das so erhaltene unbeschichtete Stahlflachprodukt kann optional im nachfolgenden Schritt m) einem Dressieren mit einem Dressiergrad von bis zu 2 % unterzogen werden, um die Oberflächenrauheit des Stahlflachprodukts zu verbessern.

Die Erfindung betrifft weiterhin ein Blechformteil geformt aus einem Stahlflachprodukt umfassend ein zuvor erläutertes Stahlsubstrat und optional einen Korrosionsschutzüberzug. Der Korrosionsschutzüberzug hat den Vorteil, dass er Zunderbildung verhindert während der Austenitisierung beim Warmumformen. Weiterhin schützt ein solcher Korrosionsschutzüberzug das geformte Blechformteil gegen Korrosion.

Für das Blechformteil gilt ebenso wie für das Stahlflachprodukt, dass für einen Dispersionsgrad $D_1$ von Ausscheidungen im oberflächennahen Drittel des Stahlsubstrates gilt:

$$25 \cdot 10^{-6}\frac{1}{nm} < D_1 < 5 \cdot 10^{-3}\frac{1}{nm}.$$

Bei den nachstehend erläuterten Umformverfahren sind die Temperaturen und Haltezeiten nicht hoch genug, um eine signifikante Veränderung der Ausscheidungen zu bewirken. Folglich vererbt sich diese beim Warmwalzen eingestellte Eigenschaft des Stahlflachprodukt auf das geformte Blechformteil. Die Ausscheidungen können also beim geformten Blechformteil die gewünschte Funktion übernehmen und dort den freien Wasserstoff reduzieren.

Bei einer speziellen Ausführungsform umfasst das Blechformteil bevorzugt einen Korrosionsschutzüberzug auf Aluminium-Basis. Bevorzugt umfasst der Korrosionsschutzüberzug des Blechformteils eine Legierungsschicht und eine Al-Basisschicht. Beim Blechformteil wird die Legierungsschicht auch häufig als Interdiffusionsschicht bezeichnet.

Die Dicke des Korrosionsschutzüberzuges beträgt bevorzugt mindestens 10 μm, besonders bevorzugt mindestens 20 μm, insbesondere mindestens 30 μm.

Die Dicke der Legierungsschicht ist bevorzugt kleiner als 30 μm, besonders bevorzugt kleiner 20 μm, insbesondere kleiner 16 μm, besonders bevorzugt kleiner 12 μm. Die Dicke der Al-Basisschicht ergibt sich aus der Differenz der Dicken von Korrosionsschutzüberzug und Legierungsschicht.

Die Legierungsschicht liegt dabei auf dem Stahlsubstrat auf und grenzt unmittelbar an dieses an. Bevorzugt besteht die Legierungsschicht des Blechformteils aus 35 - 90 Gew.-% Fe, 0,1 - 12 Gew.-% Si und optionalen weiteren Bestandteilen, deren Gehalte in Summe auf höchstens 3,5 Gew.-%, bevorzugt 2,0 Gew.-% beschränkt sind, und als Rest Aluminium. Bei den optionalen weiteren Bestandteilen handelt es sich bevorzugt um die neben Eisen vorhandenen Elemente im Stahl des Stahlsubstrates und die übrigen Elemente aus der Schmelze wie Zn und Alkali- oder Erdalkalimetalle. Diese Elemente aus der Schmelze reichern sich nur zu einem sehr geringen Teil in der Legierungsschicht an.

Die Legierungsschicht hat bevorzugt im substratnahen Bereich ein ferritisches Gefüge.

Die Al-Basisschicht des Blechformteils liegt auf der Legierungsschicht und grenzt unmittelbar an diese an. Bevorzugt besteht die Al-Basisschicht des Blechformteils aus 35 - 55 Gew.-% Fe, 0,4 - 10 Gew.-% Si, optional zu 3 Gew.-% Alkali- oder Erdalkalimetalle, bevorzugt bis zu 1,0% Gew.-% Alkali- oder Erdalkalimetalle, optional bis zu 10 % Zn und optionalen weiteren Bestandteilen, deren Gehalte in Summe auf höchstens 2,0 Gew.-% beschränkt sind, und als Rest Aluminium. Bevorzugt beträgt der optionale Gehalt an Alkali- oder Erdalkalimetallen mindestens 0,1 Gew.-%.

Bei einer bevorzugten Variante der Al-Basisschicht umfasst der optionale Gehalt an Alkali- oder Erdalkalimetallen 0,1 - 1,0 Gew.-% Mg, insbesondere 0,1 - 0,7 Gew.-% Mg, bevorzugt 0,1 - 0,5 Gew.-% Mg. Weiterhin kann der optionale Gehalt an Alkali- oder Erdalkalimetallen in der Al-Basisschicht insbesondere mindestens 0,0015 Gew.-% Ca, insbesondere mindestens 0,1 Gew.-% Ca, umfassen. Weiterhin bevorzugt besteht der optionale Gehalt an Alkali- oder Erdalkalimetallen aus 0,1 - 1,0 Gew.-% Mg, insbesondere 0,1 - 0,7 Gew.-% Mg, bevorzugt 0,1 - 0,5 Gew.-% Mg und optional mindestens 0,0015 Gew.-% Ca, insbesondere mindestens 0,1 Gew.-% Ca.

Die Al-Basisschicht kann eine homogene Elementverteilung aufweisen, bei der die lokalen Elementgehalte um nicht mehr als 10 % variieren. Bevorzugte Varianten der Al-Basisschicht weisen dagegen siliziumarme Phasen und siliziumreiche Phasen auf. Siliziumarme Phasen sind dabei Gebiete, deren mittlerer Si-Gehalt mindestens 20 % weniger beträgt als der mittlere Si-Gehalt der Al-Basisschicht. Siliziumreiche Phasen sind dabei Gebiete, deren mittlerer Si-Gehalt mindestens 20 % mehr beträgt als der mittlere Si-Gehalt der Al-Basisschicht.

Bei einer bevorzugten Variante sind die siliziumreichen Phasen innerhalb der siliziumarmen Phase angeordnet. Insbesondere bilden die siliziumreichen Phasen mindestens eine 40 % durchgehende Schicht, die von siliziumarmen Gebieten begrenzt ist. Bei einer alternativen Ausführungsvariante sind die siliziumreichen Phasen inselförmig in der siliziumarmen Phase angeordnet.

Unter "inselförmig" wird im Sinne dieser Anmeldung eine Anordnung verstanden, bei der diskrete unzusammenhängende Bereiche von einem anderen Material umschlossen werden - es sich also "Inseln" eines bestimmten Materials in einem anderen Material befinden.

Bei einer bevorzugten Variante umfasst das Blechformteil eine auf dem Korrosionsschutzüberzug angeordnete Oxidschicht. Die Oxidschicht liegt dabei insbesondere auf der Al-Basisschicht und bildet bevorzugt den äußeren Abschluss des Korrosionsschutzüberzuges.

Die Oxidschicht des Blechformteils besteht insbesondere zu mehr als 80 Gew.-% aus Oxiden, wobei der Hauptanteil der Oxide (d.h. mehr als 50 Gew.-% der Oxide) Aluminiumoxid ist. Optional sind in der Oxidschicht zusätzlich zu Aluminiumoxid Hydroxide und / oder Magnesiumoxid allein oder als Mischung vorhanden. Bevorzugt besteht der der nicht von den Oxiden und optional vorhandenen Hydroxiden eingenommene Rest der Oxidschicht aus Silizium, Aluminium, Eisen und/oder Magnesium in metallischer Form.

Die Oxidschicht hat bevorzugt eine Dicke von mindestens 50 nm, insbesondere von mindestens 100 nm. Weiterhin beträgt die Dicke maximal 4 μm, insbesondere maximal 2 μm.

Bei einer speziellen Ausgestaltung umfasst das Blechformteil einen Korrosionsschutzüberzug auf Zink-Basis.

Ein solcher Korrosionsschutzüberzug auf Zink-Basis umfasst bevorzugt bis zu 80 Gew.-% Fe, 0,2 - 6,0 Gew.-% Al, 0,1 - 10,0 Gew.-% Mg, optional 0,1 - 40 Gew.-% Mangan oder Kupfer, optional 0,1 - 10,0 Gew.-% Cer, optional höchstens 0,2 Gew.-% weitere Elemente, unvermeidbare Verunreinigung und als Rest Zink. Insbesondere beträgt der Al-Gehalt maximal 2,0 Gew.-%, bevorzugt maximal 1,5 Gew.-%. Der Fe-Gehalt, der durch Eindiffundieren zustande kommt, beträgt bevorzugt mehr als 20 Gew.-%, insbesondere mehr als 30 Gew.-%. Zudem beträgt der Fe-Gehalt insbesondere maximal 70 Gew-%, insbesondere maximal 60 Gew.-%. Der Mg-Gehalt beträgt insbesondere maximal 3,0 Gew.-%, bevorzugt maximal 1,0 Gew.-%. Der Korrosionsschutzüberzug kann durch Schmelztauchbeschichten oder durch physikalische Gasphasenabscheidung oder durch elektrolytische Verfahren aufgebracht werden.

Bei einer speziellen Weiterbildung weist das Stahlsubstrat des Blechformteils ein Gefüge mit zumindest teilweise mehr als 80 % Martensit, bevorzugt zumindest teilweise mehr als 90 % Martensit, insbesondere zumindest teilweise mehr als 95 %, besonders bevorzugt zumindest teilweise mehr als 98 % auf. Unter "teilweise aufweisen" ist in diesem Zusammenhang zu verstehen, dass es Bereiche des Blechformteils gibt, die das genannte Gefüge aufweisen. Zusätzlich kann es auch Bereiche des Blechformteils geben, die ein anderes Gefüge aufweisen. Das Blechformteil weist also abschnittsweise oder bereichsweise das genannte Gefüge auf.

Durch den hohen Martensitgehalt lassen sich sehr hohe Zugfestigkeiten und Streckgrenzen erreichen.

Bei einer alternativen Weiterbildung weist das Stahlsubstrat des Blechformteils ein Gefüge mit einem Ferritanteil von mehr als 5 %, bevorzugt mehr als 10 %, insbesondere mehr als 20 % auf. Weiterhin beträgt der Ferritanteil bevorzugt weniger als 85 %, insbesondere weniger als 70 %. Der Martensitgehalt beträgt weniger als 80 %, insbesondere weniger als 50 %. Zusätzlich kann das Gefüge optional Bainit und/oder Perlit enthalten. Das genaue Verhältnis der Gefügebestandteile hängt von der Höhe des C-Gehaltes und des Mn-Gehaltes sowie von den Abkühlbedingungen beim Umformen ab. Das so gestaltete Gefüge hat eine höhere Duktilität und führt daher zu einem verbesserten Umformverhalten. So weist ein entsprechendes Blechformteil bevorzugt eine Bruchdehnung A30 in einem Bereich von 8 % bis 25 %, bevorzugt zwischen 10 % und 22 %, insbesondere zwischen 12 % und 20 % auf.

Bei einer weitergebildeten Variante weist das Blechformteil zumindest teilweise eine Zugfestigkeit von mindestens 1500 MPa, insbesondere mindestens 1750 MPa, bevorzugt mindestens 1850 MPa auf.

Insbesondere weist das das Blechformteil zumindest teilweise eine Bruchdehnung A80 von mindestens 4 %, bevorzugt mindestens 5 %, besonders bevorzugt mindestens 6 % auf.

Zudem kann das Blechformteil bei einer bevorzugten Variante zumindest teilweise einen Biegewinkel von mindestens 30°, insbesondere mindestens 35°, bevorzugt mindestens 40° aufweisen. Unter dem Biegewinkel ist hier der, um die Blechdicke korrigierte Biegewinkel zu verstehen. Der korrigierte Biegewinkel ergibt sich aus dem ermittelten Biegewinkel im Kraftmaximum (gemessen nach VDA-Norm 238-100) (auch als maximaler Biegewinkel bezeichnet) aus der Formel

$$Biegewinkel_{korrigiert} = Biegewinkel_{ermittel} \cdot \sqrt{Blechdicke}$$

wobei die Blechdicke in mm in die Formel einzusetzen ist. Dies gilt für Blechdicken größer 1,0 mm. Bei Blechdicken kleiner 1,0 mm entspricht der korrigierte Biegewinkel dem ermittelten Biegewinkel.

Unter "teilweise aufweisen" ist in diesem Zusammenhang zu verstehen, dass es Bereiche des Blechformteils gibt, die die genannte mechanische Eigenschaft aufweisen. Zusätzlich kann es auch Bereiche des Blechformteils geben, deren mechanische Eigenschaft unterhalb des Grenzwertes liegt. Das Blechformteil weist also abschnittsweise oder bereichsweise die genannte mechanische Eigenschaft auf. Dies liegt daran, dass unterschiedliche Bereiche des Blechformteils unterschiedliche Wärmebehandlungen erfahren können. Beispielsweise können einzelne Bereiche schneller abgekühlt werden als andere, wodurch sich in den schneller abgekühlten Bereichen beispielsweise mehr Martensit bildet. Daher stellen sich auch unterschiedliche mechanische Eigenschaften in den verschiedenen Bereichen ein.

Die genannten mechanischen Kennzahlen haben sich als besonders vorteilhaft erwiesen, um den Einsatz in einem Automobil mit guter Crashperformance zu gewährleisten.

Bei einer besonders bevorzugten Variante weist das Blechformteil einen Korrosionsschutzüberzug auf Aluminiumbasis auf, der eine Legierungsschicht und eine Al-Basisschicht umfasst. Dabei gilt für einen Dispersionsgrad $D_2$ von Ausscheidungen in der Legierungsschicht:

$$25 \cdot 10^{-6} \frac{1}{nm} < D_2 < 5 \cdot 10^{-3} \frac{1}{nm}$$

Durch die Einstellung der Ausscheidungen im Stahlsubstrat des Stahlflachproduktes ergibt sich, dass ebenfalls in der, bevorzugt ferritischen, Legierungsschicht ein entsprechender Dispersionsgrad $D_2$ vorliegt. Dies ist besonders vorteilhaft, da hierdurch eintretender Wasserstoff bereits in der weichen Legierungsschicht abgefangen werden kann, bevor er in das Stahlsubstrat eintritt. Dies reduziert das Risiko von Wasserstoffversprödung noch weiter, da der Wasserstoff nicht in das harte und damit für Versprödung anfällig Substrat dringen kann.

Bei dem erfindungsgemäßen Blechformteil handelt es sich bevorzugt um ein Bauteil für ein Landfahrzeug, Seefahrzeug oder Luftfahrzeug. Besonders bevorzugt handelt es sich um ein Automobilteil, insbesondere um ein Karrosserieteil. Bevorzugt ist das Bauteil eine B-Säule, Längsträger, A-Säule, Schweller oder Querträger.

Beim erfindungsgemäßen Verfahren zum Herstellen eines in der voranstehend erläuterten Weise beschaffenen erfindungsgemäßen Blechformteils werden mindestens folgende Arbeitsschritte durchlaufen:

a) Bereitstellen eines Blechzuschnitts aus einem zuvor beschriebenen Stahlflachprodukt;

b) Erwärmen des Blechzuschnitts derart, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100 °C aufweist, wobei Ms die der Martensitstarttemperatur bezeichnet;

c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20 s, bevorzugt höchstens 15 s, beträgt;

d) Warmpressformen des Blechzuschnitts zu dem Blechformteil, wobei der Zuschnitt im Zuge des Warmpressformens über eine Dauer $t_{WZ}$ von mehr als 1 s mit einer zumindest teilweise mehr als 30 K/s betragenden Abkühlgeschwindigkeit $r_{WZ}$ auf die Zieltemperatur $T_{Ziel}$ abgekühlt und optional dort gehalten wird;

e) Entnehmen des auf die Zieltemperatur $T_{Ziel}$ abgekühlten Blechformteils aus dem Werkzeug.

Beim erfindungsgemäßen Verfahren wird somit ein Zuschnitt, der aus einem entsprechend den voranstehenden Erläuterungen in geeigneter Weise zusammengesetzten Stahl besteht, bereitgestellt (Arbeitsschritt a)), der dann in an sich bekannter Weise so erwärmt wird, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100 °C beträgt. Unter teilweisem Überschreiten einer Temperatur (hier AC3 bzw. Ms+100 °C) wird im Sinne dieser Anmeldung verstanden, dass mindestens 30 %, insbesondere mindestens 60 %, des Volumens des Zuschnitts eine entsprechende Temperatur überschreiten. Beim Einlegen in das Umformwerkzeug weist also mindestens 30 % des Zuschnitts ein austenitisches Gefüge auf, d. h. die Umwandlung vom ferritischen ins austenitische Gefüge muss beim Einlegen in das Umformwerkzeug noch nicht abgeschlossen sein. Vielmehr können bis zu 70 % des Volumens des Zuschnitts beim Einlegen in das Umformwerkzeug aus anderen Gefügebestandteilen, wie angelassenem Bainit, angelassenem Martensit und/oder nicht bzw. teilweise rekristallisiertem Ferrit bestehen. Zu diesem Zweck können bestimmte Bereiche des Zuschnitts während der Erwärmung gezielt auf einem niedrigeren Temperaturniveau gehalten werden als andere. Hierzu kann die Wärmezufuhr gezielt nur auf bestimmte Abschnitte des Zuschnitts gerichtet werden oder die Teile, die weniger erwärmt werden sollen, gegen die Wärmezufuhr abgeschirmt werden. In dem Teil des Zuschnittmaterials, dessen Temperatur niedriger bleibt, entsteht im Zuge der Umformung im Werkzeug kein oder nur deutlich weniger Martensit, so dass das Gefüge dort deutlich weicher ist als in den jeweils anderen Teilen, in denen ein martensitisches Gefüge vorliegt. Auf diese Weise kann im jeweils geformten Blechformteil gezielt ein weicherer Bereich eingestellt werden, indem beispielsweise eine für den jeweiligen Verwendungszweck optimale Zähigkeit vorliegt, während die anderen Bereiche des Blechformteils eine maximierte Festigkeit besitzen.

Maximale Festigkeitseigenschaften des erhaltenen Blechformteils können dadurch ermöglicht werden, dass die zumindest teilweise im Blechzuschnitt erreichte Temperatur zwischen Ac3 und 1000 °C, bevorzugt zwischen 850 °C und 950 °C liegt.

Dabei ist die zu überschreitende Mindesttemperatur Ac3 gemäß der von HOUGARDY, HP. in Werkstoffkunde Stahl, Band 1: Grundlagen, Verlag Stahleisen GmbH, Düsseldorf, 1984, p. 229., angegebenen Formel:

$$Ac3 = (902 - 225*\%C + 19*\%Si - 11*\%Mn - 5*\%Cr + 13*\%Mo - 20*\%Ni + 55*\%V) \ °C$$

mit %C = jeweiliger C-Gehalt, %Si = jeweiliger Si-Gehalt, %Mn = jeweiliger Mn-Gehalt, %Cr = jeweiliger Cr-Gehalt, %Mo = jeweiliger Mo-Gehalt, %Ni =jeweiliger Ni-Gehalt und %V = jeweiliger V-Gehalt des Stahls, aus dem der Zuschnitt besteht, bestimmt.

Eine optimal gleichmäßige Eigenschaftsverteilung lässt sich dadurch erreichen, dass der Zuschnitt im Arbeitsschritt b) vollständig durcherwärmt wird.

Bei einer bevorzugten Ausführungsvariante beträgt die mittlere Aufheizgeschwindigkeit $r_{Ofen}$ des Blechzuschnittes beim Erwärmen in Schritt b) mindestens 3 K/s, bevorzugt mindestens 5 K/s, insbesondere mindestens 10 K/s, bevorzugt mindestens 15 K/s. Die mittlere Aufheizgeschwindigkeit $r_{Ofen}$ ist dabei als mittlere Aufheizgeschwindigkeit von 30 °C auf 700 °C zu verstehen.

Bei einer bevorzugten Ausführungsvariante erfolgt die Erwärmung in einem Ofen mit einer Ofentemperatur $T_{Ofen}$ von mindestens 850 °C, bevorzugt mindestens 880 °C, besonders bevorzugt mindestens 900 °C, insbesondere mindestens 920 °C, und maximal 1000 °C, bevorzugt maximal 950 °C, besonders bevorzugt maximal 930 °C.

Bevorzugt beträgt der Taupunkt der Ofenatmosphäre im Ofen beträgt hierbei mindestens -20 °C, bevorzugt mindestens -15 °C, insbesondere mindestens -5 °C, besonders bevorzugt mindestens 0°C und maximal +25 °C, bevorzugt maximal + 20 °C insbesondere maximal +15 °C.

Bei einer speziellen Ausführungsvariante erfolgt die Erwärmung in Schritt b) stufenweise in Bereichen mit unterschiedlicher Temperatur. Insbesondere erfolgt die Erwärmung in einem Rollenherdofen mit unterschiedlichen Heizzonen. Hierbei erfolgt die Erwärmung in einer ersten Heizzone mit einer Temperatur (sogenannte Ofeneinlauftemperatur) von mindestens 650 °C, bevorzugt mindestens 680 °C, insbesondere mindestens 720 °C. Maximal beträgt die Temperatur in der ersten Heizzone bevorzugt 900 °C, insbesondere maximal 850 °C. Weiterhin bevorzugt beträgt die maximale Temperatur aller Heizzonen im Ofen maximal 1200 °C, insbesondere maximal 1000 °C, bevorzugt maximal 950 °C, besonders bevorzugt maximal 930 °C.

Die Gesamtzeit im Ofen $t_{Ofen}$, die sich aus einer Erwärmungszeit und einer Haltezeit zusammensetzt, beträgt bei beiden Varianten (konstante Ofentemperatur, stufenweise Erwärmung) bevorzugt mindestens 2 Minuten, insbesondere mindestens 3 Minuten, bevorzugt mindestens 4 Minuten. Weiterhin beträgt die Gesamtzeit im Ofen bei beiden Varianten bevorzugt maximal 20 Minuten, insbesondere maximal 15 Minuten, bevorzugt maximal 12 Minuten, insbesondere maximal 8 Minuten. Längere Gesamtzeiten im Ofen haben den Vorteil, dass eine gleichmäßige Austenitisierung des Blechzuschnittes sichergestellt ist. Andererseits führt ein zu langes Halten oberhalb von Ac3 zu einer Kornvergröberung, die sich negativ auf die mechanischen Eigenschaften auswirkt.

Der so erwärmte Zuschnitt wird aus der jeweiligen Erwärmungseinrichtung, bei der es sich beispielsweise um einen konventionellen Erwärmungsofen, eine ebenso an sich bekannte Induktionserwärmungseinrichtung oder eine konventionelle Einrichtung zum Warmhalten von Blechformteilen handeln kann, entnommen und so schnell in das Umformwerkzeug transportiert, dass seine Temperatur beim Eintreffen in dem Werkzeug zumindest teilweise oberhalb von Ms+100 °C liegt, bevorzugt oberhalb von 600 °C, insbesondere oberhalb von 650 °C, besonders bevorzugt oberhalb von 700 °C. Hierbei bezeichnet Ms die Martensitstarttemperatur. Bei einer besonders bevorzugten Variante liegt die Temperatur zumindest teilweise oberhalb der AC1-Temperatur. Bei allen diesen Varianten beträgt die Temperatur insbesondere maximal 900 °C. Durch diese Temperaturbereiche wird insgesamt eine gute Umformbarkeit des Materials gewährleistet.

Im Arbeitsschritt c) wird der Transfer des austenitisierten Zuschnitts von der jeweils zum Einsatz kommenden Erwärmungseinrichtung zum Umformwerkzeug innerhalb von vorzugsweise höchstens 20 s, insbesondere von maximal 15 s absolviert. Ein derart schneller Transport ist erforderlich, um eine zu starke Abkühlung vor der Verformung zu vermeiden.

Das Werkzeug besitzt beim Einlegen des Zuschnitts typischerweise eine Temperatur zwischen Raumtemperatur (RT) und 200 °C, bevorzugt zwischen 20 °C und 180 °C, insbesondere zwischen 50 °C und 150 °C. Optional kann das Werkzeug in einer besonderen Ausführungsform zumindest bereichsweise auf eine Temperatur $T_{WZ}$ von mindestens 200 °C, insbesondere mindestens 300 °C temperiert sein, um das Bauteil nur partiell zu härten. Weiterhin beträgt die Werkzeugtemperatur $T_{WZ}$ bevorzugt maximal 600 °C, insbesondere maximal 550 °C. Es ist lediglich sicherzustellen, dass die Werkzeugtemperatur $T_{WZ}$ unterhalb der gewünschten Zieltemperatur $T_{Ziel}$ liegt. Die Verweilzeit im Werkzeug $t_{WZ}$ beträgt bevorzugt mindestens 2 s, insbesondere mindestens 3 s, besonders bevorzugt mindestens 5 s. Maximal beträgt die Verweilzeit im Werkzeug bevorzugt 25 s, insbesondere maximal 20s.

Die Zieltemperatur $T_{Ziel}$ des Blechformteils liegt zumindest teilweise unterhalb 400 °C, bevorzugt unterhalb 300 °C, insbesondere unterhalb von 250 °C, bevorzugt unterhalb von 200 °C, besonders bevorzugt unterhalb von 180 °C, insbesondere unterhalb von 150 °C. Alternativ liegt die Zieltemperatur $T_{Ziel}$ des Blechformteils besonders bevorzugt unter Ms-50 °C, wobei Ms die Martensitstarttemperatur bezeichnet. Weiterhin beträgt die Zieltemperatur des Blechformteils bevorzugt mindestens 20 °C, besonders bevorzugt mindestens 50 °C.

Die Martensitstarttemperatur eines im Rahmen der erfindungsgemäßen Vorgaben liegenden Stahls ist gemäß der Formel:

$$Ms~[°C] = (490,85 — 302,6~\%C — 30,6~\%Mn - 16,6~\%Ni — 8,9~\%Cr + 2,4~\%Mo — 11,3~\%Cu +$$
$$8,58~\%Co + 7,4~\%W — 14,5~\%Si)~[°C/Gew.-\%]$$

zu berechnen, wobei hier mit C% der C-Gehalt, mit %Mn der Mn-Gehalt, mit %Mo der Mo-Gehalt, mit %Cr der Cr-Gehalt, mit %Ni der Ni-Gehalt, mit %Cu der Cu-Gehalt, mit %Co der Co-Gehalt, mit %W der W-Gehalt und mit %Si der Si-Gehalt des jeweiligen Stahls in Gew.-% bezeichnet sind.

Die AC1-Temperatur und die AC3-Temperatur eines im Rahmen der erfindungsgemäßen Vorgaben liegenden Stahls ist gemäß den Formeln:

$$AC1[°C] = (739 — 22*\%C - 7*\%Mn + 2*\%Si + 14*\%Cr + 13*\%Mo - 13*\%Ni +20*\%V~)[°C/Gew.-\%]$$

und

$$AC3[°C] = (902 - 225*\%C + 19*\%Si - 11*\%Mn - 5*\%Cr + 13*\%Mo - 20*\%Ni + 55*\%V)[°C/Gew.-\%]$$

zu berechnen, wobei auch hiermit mit %C der C-Gehalt, mit %Si der Si-Gehalt mit %Mn der Mn-Gehalt mit %Cr der Cr-Gehalt, mit %Mo der Mo-Gehalt, mit %Ni der Ni-Gehalt und mit +%V der Vanadium-Gehalt des jeweiligen Stahls bezeichnet sind (Brandis H 1975 TEW-Techn. Ber. 1 8-10).

Im Werkzeug wird der Zuschnitt somit nicht nur zu dem Blechformteil geformt, sondern gleichzeitig auch die Zieltemperatur abgeschreckt. Die Abkühlrate im Werkzeuge $r_{WZ}$ auf die Zieltemperatur beträgt insbesondere mindestens 20 K/s, bevorzugt mindestens 30 K/s, insbesondere mindestens 50 K/s, in besonderer Ausführung mindestens 100 K/s.

Nach dem Entnehmen des Blechformteils in Schritt e) erfolgt ein Abkühlen des Blechformteils auf eine Abkühltemperatur $T_{AB}$ von weniger als 100 °C innerhalb einer Abkühldauer $t_{AB}$ von 0,5 bis 600 s. Dies geschieht im Regelfall durch eine Luftabkühlung.

Im Folgenden wird die Erfindung anhand von Ausführungsbeispielen näher erläutert.

Zum Nachweis der Wirkung der Erfindung wurden mehrere Versuche durchgeführt. Dafür wurden Brammen mit den in Tabelle 1 angegebenen Zusammensetzungen mit einer Dicke von 200 - 280 mm und Breite von 1000 - 1200 mm erzeugt, in einem Stoßofen auf eine jeweilige Temperatur T1 aufgeheizt und zwischen 30 und 450 min auf T1 gehalten, bis die Temperatur T1 im Kern der Brammen erreicht war und die Brammen somit durcherwärmt waren. Die Herstellungsparameter sind in Tabelle 2 angegeben. Die Brammen wurden mit ihrer jeweiligen Durcherwärmungstemperatur T1 aus dem Stoßofen ausgetragen und einem Warmwalzen unterzogen. Die Versuche wurden als kontinuierliche Warmbandwalzung ausgeführt. Dazu wurden die Brammen zunächst zu einem Zwischenprodukt der Dicke 40 mm vorgewalzt, wobei die Zwischenprodukte, welche bei der Warmbandwalzung auch als Vorbänder bezeichnet werden können. Die Vorbänder wurden unmittelbar nach der Vorwalzung dem Fertigwalzen zugeführt, wobei die Vorbandtemperatur T2 der Temperatur des Bandanfangs beim Warmwalzen entspricht. In allen Fällen bis auf Versuch 11 wurde die lokale Temperatur des Vorbandes so eingestellt, dass die Temperaturen der einzelnen Abschnitte des Vorbandes beim Warmwalzen um nicht mehr als 60 K variieren. Tabelle 2 gibt mit $\Delta$T2 die Differenz zwischen maximaler und minimaler Temperatur der einzelnen Abschnitte des Vorbandes jeweils beim Eintritt der entsprechenden Abschnitte in die Walzstraße an. Bei Versuch 11 wurde keine solche Temperiermaßnahme eingesetzt, woraufhin die Temperatur entlang des Bandes abfiel mit einer Temperaturvariation von 122 K. In allen anderen Fällen wurden geeignete Temperiermaßnahmen eingesetzt, so dass die Temperaturvariation nicht mehr als 43 K beträgt. Konkret wurden die Vorbänder durch einen umhausten Bereich geführt, der eine Abkühlung reduziert hat. Die Vorbänder wurden zu Warmbänder mit einer Enddicke von 3 - 7 mm und den in Tabelle 2 angegebenen jeweiligen Endwalztemperaturen T3 ausgewalzt, auf die Haspeltemperatur T4 abgekühlt und bei den jeweiligen Haspeltemperaturen T4 zu Coils aufgewickelt und dann in ruhender Luft abgekühlt. Die Warmbänder wurden in konventioneller Weise mittels Beizen entzundert, bevor sie einem Kaltwalzen mit den in Tabelle 2 angegebenen Kaltwalzgraden unterzogen wurden. Die Dicke der erzeugten Stahlbänder lag bei allen Versuchen zwischen 1,0 mm und 2,0 mm.

Die kaltgewalzten Stahlflachprodukte 1 - 13 wurden in einem Durchlaufglühofen auf eine jeweilige Glühtemperatur T5 (siehe Tabelle 3) erwärmt und für jeweils 100s auf Glühtemperatur T5 gehalten, bevor sie mit einer Abkühlrate von 1 K/s auf ihre jeweilige Zwischentemperatur T6 abgekühlt wurden. Die Kaltbänder wurden mit ihrer jeweiligen Zwischentemperatur T6 (bzw. Eintauchtemperatur T6) durch ein schmelzflüssiges Beschichtungsbad der Temperatur T7 geführt. Die Zusammensetzung des Beschichtungsbads ist in Tabelle 3 angegebenen. Nach dem Beschichten wurden die beschichteten Bänder auf konventionelle Weise abgeblasen, wodurch Auflagen mit unterschiedlichen Schichtdicken erzeugt wurden (siehe Tabelle 3). Die Bänder wurden zunächst mit einer mittleren Abkühlrate von 10 - 15 K/s auf 600 °C abgekühlt. Im weiteren Abkühlverlauf zwischen 600 °C und 450 °C und zwischen 400 °C und 300 °C wurden die Bänder über die in Tabelle 2 angegebenen Abkühldauern $T_{mT}$ und $T_{nT}$ abgekühlt. Zwischen 450 °C und 400 °C und unterhalb von 220 °C wurden die Bänder mit einer Abkühlrate von jeweils 5 - 15 K/s abgekühlt.

Zum Vergleich wurden die Stahlflachprodukte 1, 5 und 10 einer entsprechenden Glühbehandlung in einem Durchlaufglühofen unterzogen, ohne sie zu beschichten. Dies sind die Versuche 14, 15, 16. Daher sind die Herstellungsbedingungen der Bänder 1 und 14, sowie 5 und 15, sowie 10 und 16 in Tabelle 2 identisch. Die kaltgewalzten Stahlflachprodukte 14 - 16 wurden in einem Durchlaufglühofen auf eine jeweilige Glühtemperatur T5 (siehe Tabelle 3) erwärmt und für jeweils 100 s auf Glühtemperatur T5 gehalten, bevor sie mit einer Abkühlrate von 1 K/s auf ihre jeweilige Zwischentemperatur T6 abgekühlt wurden. Anschließend wurden die Bänder zunächst mit einer mittleren Abkühlrate von 10 - 15 K/s auf 600 °C abgekühlt. Im weiteren Abkühlverlauf zwischen 600 °C und 450 °C und zwischen 400 °C und 300 °C wurden die Bänder über die in Tabelle 2 angegebenen Abkühldauern $T_{mT}$ und $T_{nT}$ abgekühlt. Zwischen 450 °C und 400 °C und unterhalb von 220 °C wurden die Bänder mit einer Abkühlrate von jeweils 5 - 15 K/s abgekühlt.

Nach dem Abkühlen auf Raumtemperatur wurden von den so hergestellten Stahlflachprodukten Längsschliffe angefertigt. Bei Längsschliffen liegt die Schliffebene senkrecht zur Bandoberfläche und parallel zur Hauptverformungsrichtung (Walzrichtung). In diesen Längsschliffen war die gesamte Dicke des Stahlflachproduktes (Substrat und Korrosionsschutzüberzug) dargestellt. An diesen Längsschliffen wurden Kohlenstoffausziehabdrücke angefertigt. Zur Bestimmung von $D_1$ wurden diese Kohlenstoffausziehabdrücke im oberflächennahen Drittel angefertigt. Die Kohlenstoffausziehabdrücke wurden im Transmissionselektronenmikroskop (TEM) untersucht und mittels computergestützter Bildanalyse ausgewertet.

Bei den erfindungsgemäßen Varianten 1 - 10 und 14 - 16 lagen die Ergebnisse alle zwischen $25 \cdot 10^{-6} \frac{1}{nm}$ und $5 \cdot 10^{-3} \frac{1}{nm}$.

Bei der Vergleichsvariante 11 verläuft der Ausscheidungsprozess aufgrund der großen Temperaturschwankung am Vorband ΔT2 zum einen lokal unterschiedlich. Daher ergibt sich eine heterogene Dispersion. Zudem anderen führen großen Mengen an ausscheidungsbildenden Elementen ebenfalls zu einer hohen treibenden Kraft für die Ausscheidungsbildung. Außerdem führt die Temperaturvariation ΔT2 zu einem anderen Abkühlverhalten des gehaspelten Coils. Im Ergebnis kommt es daher im gesamten Band zu einer hohen Dispersion. Sowohl diese hohe Dispersion als auch die Ungleichmäßigkeit derselben führen gemeinsam zur Verschlechterung der mechanischen Eigenschaften, insbesondere dem niedrigen Biegewinkel, des finalen Blechformteils.

Bei der Vergleichsvariante 12 ist die Temperatur T1 zu niedrig, so dass keine ausreichende Menge an bereits in der Bramme vorhandenen, meist groben Ausscheidungen aufgelöst werden konnte. Daher ist die treibende Kraft für die Ausscheidungsbildung und damit die Ausscheidungsmenge gering. Darüber hinaus liegen weiterhin grobe, nicht aufgelöste Ausscheidungen vor, die den mittleren Durchmesser der Ausscheidungen erhöhen. Dies führt zu einer zu geringen Dispersion und einer nicht ausreichenden Abbindung von Wasserstoff beim Blechformteil.

Bei der Vergleichsvariante 13 ist die Temperatur T2 so hoch, dass nahezu alle in der Bramme vorhandenen Ausscheidungen in Lösung gebracht werden. Aufgrund der großen Menge an aus-scheidungsbildenden Elementen (beispielsweise belegt durch den Wert für $(Mo \cdot Cr \cdot Ti \cdot V \cdot Nb)^{\frac{C}{5}}$ ) ist die treibende Kraft für die Ausscheidungsbildung hoch und es kommt daher zur Bildung einer großen Menge an überwiegend feinen Ausscheidungen und somit zu einer hohen Dispersion. Dies wirkt sich zwar positiv auf den Gehalt an diffusiblem Wasserstoff aus, der sehr niedrig ist, allerdings ergibt sich auch eine Verschlechterung der mechanischen Eigenschaften des Blechformteils, was am Biegewinkel zu erkennen ist.

Für die Vergleichsvarianten 11 - 13 sind in den Tabellen die nicht-erfindungsgemäßen Einträge unterstrichen dargestellt.

Von den so erzeugten 16 Stahlbändern sind jeweils Zuschnitte abgeteilt worden, die für die weiteren Versuche verwendet worden sind. Die Daten hierzu sind in Tabelle 4 angegeben. Bei diesen Versuchen sind aus den jeweiligen Zuschnitten Blechformteil-Proben 1 - 16 in Form von 200 x 300 mm² großen Platten warmpressgeformt worden. Dazu sind die Zuschnitte in einer Erwärmungseinrichtung, beispielsweise in einem konventionellen Erwärmungsofen, von Raumtemperatur mit einer mittleren Aufheizgeschwindigkeit $r_{Ofen}$ (zwischen 30 °C und 700 °C) in einem Ofen mit einer Ofentemperatur $T_{0fen}$ erwärmt worden. Die Gesamtdauer im Ofen, die ein Erwärmen und ein Halten umfasst, ist mit $t_{0fen}$ bezeichnet. Der Taupunkt der Ofenatmosphäre ist in der Tabelle 4 angegeben. Anschließend sind die Zuschnitte aus der Erwärmungseinrichtung entnommen und in ein Umformwerkzeug, welches die Temperatur $T_{WZ}$ besitzt, eingelegt worden. Beim Zeitpunkt des Entnehmens aus dem Ofen hatten die Zuschnitte die Ofentemperatur angenommen. Die sich aus der für das Entnehmen aus der Erwärmungseinrichtung, den Transport zum Werkzeug und das Einlegen ins Werkzeug zusammensetzende Transferdauer $t_{Trans}$ lag bei 8 s. Die Temperatur $T_{Einlg}$ der Zuschnitte beim Einlegen in das Umformwerkzeug lag in allen Fällen oberhalb der jeweiligen Martensitstarttemperatur+100 °C. Im Umformwerkzeug sind die Zuschnitte zum jeweiligen Blechformteil umgeformt worden, wobei die Blechformteile im Werkzeug mit einer Abkühlgeschwindigkeit $r_{WZ}$ abgekühlt wurden. Die Verweildauer im Werkzeug wird mit $t_{WZ}$ bezeichnet. Abschließend sind die Proben an Luft auf Raumtemperatur abgekühlt worden. In Tabelle 4 sind für verschiedene Varianten die genannten Parameter angegeben, wobei "RT" die Raumtemperatur abkürzt.

In Tabelle 5 sind die Gesamtergebnisse für die erhaltenen Blechformteile zusammengestellt. Die ersten Spalten geben die Probennummer und die Stahlsorte gemäß Tabelle 1 an. In den weiteren Spalten ist der Anteil an freiem Wasserstoff, der Biegewinkel und die Zugfestigkeit angegeben. Methoden zur Bestimmung des Anteils an freiem Wasserstoff sind dem Fachmann an sich bekannt, beispielsweise Desorptionsmassenspektrometrie mit erwärmten Proben (Thermal Desorption Mass Spectrometry (TDMS)).

Bei den unbeschichteten Proben lag der Anteil an freiem Wasserstoff unterhalb der Nachweisgrenze. Der Dispersionsgrad $D_1$ war bei den unbeschichteten Proben 14 - 16 vergleichbar zu den jeweiligen beschichteten Proben 1,5 und 10 aufgrund der vergleichbaren Glühbehandlung. Dadurch dass sich die gleiche erfindungsgemäße Verteilung der Ausscheidungen bei den unbeschichteten Proben einstellt, ergibt sich auch hier die Wirkung als effektive Wasserstofffallen. Somit kommt es zu einer verbesserten Beständigkeit gegenüber Wasserstoffversprödung unter Korrosionsbedingungen beim Einsatz des Blechformteils.

Der maximale Biegewinkel ist gemäß der VDA-Norm 238-100 mit einer Biegeachse quer zur Walzrichtung ermittelt worden. Dabei wird der maximale Biegewinkel jeweils nach der in der Norm angegebenen Formel aus dem Stempelweg errechnet (der maximale Biegewinkel ist der Biegewinkel, bei welchem die Kraft im Biegeversuch ihr Maximum hat). Um den Einfluss der Blechdicke auf den Biegewinkel zu eliminieren wurde der korrigierte Biegewinkel aus dem maximalen Biegewinkel berechnet nach der Formel

$$Biegewinkel_{korrigiert} = Biegewinkel_{max} \cdot \sqrt{Blechdicke}$$

wobei die Blechdicke in mm in die Formel einzusetzen ist. Die Zugfestigkeit wurde gemäß DIN EN ISO 6892-1 Probenform 2 (Anhang B Tab. B1) an Proben quer zur Walzrichtung ermittelt.

Nach dem Abkühlen auf Raumtemperatur wurden von den so hergestellten Blechformteilen Längsschliffe angefertigt. Bei Längsschliffen liegt die Schliffebene senkrecht zur Bandoberfläche und parallel zur Hauptverformungsrichtung (Walzrichtung). In diesen Längsschliffen war die gesamte Dicke des Blechformteils (Substrat und Korrosionsschutzüberzug) dargestellt. An diesen Längsschliffen wurden Kohlenstoffausziehabdrücke angefertigt. Zur Bestimmung von $D_1$ wurden diese Kohlenstoffausziehabdrücke im oberflächennahen Drittel angefertigt. Zur Bestimmung von $D_2$ wurden die Kohlenstoffausziehabdrücke in der Legierungsschicht angefertigt. Die Kohlenstoffausziehabdrücke wurden im Transmissionselektronenmikroskop (TEM) untersucht und mittels computergestützter Bildanalyse ausgewertet.

Bei den erfindungsgemäßen Proben 1-10 lag der Dispersionsgrad $D_2$ zwischen $25 \cdot 10^{-6}\frac{1}{nm}$ und $5 \cdot 10^{-3}\frac{1}{nm}$ (siehe Tabelle 5).

Die unbeschichteten Proben weisen naturgemäß keine Legierungsschicht auf, so dass der Dispersionsgrad $D_2$ nicht definiert ist.

Beim Dispersionsgrad $D_1$ zeigte sich, dass dieser im Rahmen der Messungenauigkeit mit dem Dispersionsgrad $D_1$ am Stahlflachprodukt vor der Umformung übereinstimmte. Durch das beschriebene Umformverfahren kommt es also zu keiner signifikanten Änderung des Dispersionsgrades $D_1$. Dies liegt vermutlich daran, dass die Erwärmung nicht hoch genug ist bzw. nicht lange genug dauert, um zu einer Auflösung der Ausscheidungen zu führen. Der Dispersionsgrad $D_1$ ist daher in Tabelle 5 nicht erneut angegeben, sondern stimmt mit den Werten aus Tabelle 3 überein.

Weiterhin wurde das Gefüge des Blechformteils jeweils bestimmt. Dabei ergab sich in allen Fällen ein martensitisches Gefüge mit einem Martensitanteil von mehr als 95 Flächen-%.

Spezielle Ausführungsformen sind in den nachfolgenden Sätzen beschrieben, bei denen es sich nicht um Ansprüche handelt.

1. Stahlflachprodukt für die Warmumformung, umfassend ein Stahlsubstrat aus Stahl, der neben Eisen und unvermeidbaren Verunreinigungen (in Gew.-%) aus

| | |
|---|---|
| C: | 0,25 - 0,8 %, |
| Si: | 0,01 - 2,0 %, |
| Al: | 0,001 - 1,0 %, |
| B: | 0,0005 - 0,01 %, |
| P: | ≤ 0,03 %, |
| S: | ≤ 0,02 %, |
| N: | ≤ 0,03 %, |
| Sn: | ≤ 0,03 %, |
| As: | ≤ 0,01 %, |
| Sb: | ≤ 0,02 %, |

mindestens eines der Elemente aus der Gruppe umfassend Ti, Nb und V mit der Maßgabe, dass für die Gehalte gilt:

| | |
|---|---|
| Ti: | 0,008 - 0,10 %, |
| Nb: | 0,01 - 0,07 %, |
| V: | 0,01 - 0,4 %, |

sowie optional einem oder mehreren der Elemente "Cr, Mn, Co, Cu, Mo, Ni, Ca, W, Ce, La" in folgenden Gehalten:

| | |
|---|---|
| Cr: | 0,01 - 1,0 %, |
| Mn: | 0,01 - 3,5 %, |
| Co: | 0,05 - 1,0 %, |
| Cu: | 0,01 - 0,2 %, |
| Mo: | 0,002 - 1,0 %, |
| Ni: | 0,01 - 2,0 %, |
| Ca: | 0,0005 - 0,01 %, |
| W: | 0,001 - 1,0 %, |
| Ce+La: | 0,01 - 0,03 %, |

besteht, wobei für einen Dispersionsgrad $D_1$ von Ausscheidungen im oberflächennahen Drittel des Stahlsubstrates gilt:

$$25 \cdot 10^{-6} \frac{1}{nm} < D_1 < 5 \cdot 10^{-3} \frac{1}{nm}$$

2. Stahlflachprodukt nach Satz 1, wobei die Elemente Mo, Cr, Ti, V und Nb im Stahl vorhanden sind und wobei für die Elementgehalte gilt:

$$0.03 < (Mo \cdot Cr \cdot Ti \cdot V \cdot Nb)^{\frac{C}{5}} < 0,4$$

3. Stahlflachprodukt nach einem der Sätze 1 bis 2, wobei für die Elementgehalte gilt:

$$Ni + Cr \leq 1,1$$

4. Stahlflachprodukt nach einem der voranstehenden Sätze, dadurch gekennzeichnet, dass es auf mindestens einer Seite einen Korrosionsschutzüberzug aufweist.

5. Stahlflachprodukt nach Satz 4, dadurch gekennzeichnet, dass der Korrosionsschutzüberzug ein Korrosionsschutzüberzug auf Aluminium-Basis ist und eine Legierungsschicht und eine Al-Basisschicht aufweist.

6. Stahlflachprodukt nach Satz 5, dadurch gekennzeichnet, dass die Legierungsschicht aus 25 - 50 Gew.-% Fe, 5 - 20 Gew.-% Si, optionalen weiteren Bestandteilen, deren Gehalte in Summe auf höchstens 5,0 Gew.-% beschränkt sind, und als Rest Aluminium besteht und/oder die Al-Basisschicht aus 1,0 - 15 Gew.-% Si, optional 2 - 4 Gew.-% Fe, optional bis zu 5,0 Gew.-% Alkali- oder Erdalkalimetalle, optional bis zu 10 % Zn und optionalen weiteren Bestandteilen, deren Gehalte in Summe auf höchstens 2,0 Gew.-% beschränkt sind, und als Rest Aluminium besteht.

7. Stahlflachprodukt nach einem der Sätze 5 bis 6, dadurch gekennzeichnet, dass für einen Dispersionsgrad $D_2$ von Ausscheidungen in der Legierungsschicht gilt:

$$25 \cdot 10^{-6} \frac{1}{nm} < D_2 < 5 \cdot 10^{-3} \frac{1}{nm}$$

8. Verfahren zum Herstellen eines Stahlflachproduktes für die Warmumformung mit einem Korrosionsschutzüberzug, umfassend folgende Arbeitsschritte:

a) Zurverfügungstellen einer Bramme oder einer Dünnbramme, die aus Stahl, der neben Eisen und unvermeidbaren Verunreinigungen (in Gew.-%) aus

| | |
|---|---|
| C: | 0,25 - 0,8 %, |
| Si: | 0,01 - 2,0 %, |
| Al: | 0,001 - 1,0 %, |
| B: | 0,0005 - 0,01 %, |
| P: | $\leq$ 0,03 %, |
| S: | $\leq$ 0,02 %, |
| N: | $\leq$ 0,03 %, |

(fortgesetzt)

| | |
|---|---|
| Sn: | ≤ 0,03 %, |
| As: | ≤ 0,01 %, |
| Sb: | ≤ 0,02 %, |

mindestens eines der Elemente aus der Gruppe umfassend Ti, Nb und V mit der Maßgabe, das für die Gehalte gilt:

| | |
|---|---|
| Ti: | 0,008 - 0,10 %, |
| Nb: | 0,01 - 0,07 %, |
| V: | 0,01 - 0,4 %, |

sowie optional einem oder mehreren der Elemente "Cr, Mn, Co, Cu, Mo, Ni, Ca, W, Ce, La" in folgenden Gehalten:

| | |
|---|---|
| Cr: | 0,01 - 1,0 %, |
| Mn: | 0,01 - 3,5 %, |
| Co: | 0,05 - 1,0 %, |
| Cu: | 0,01 - 0,2 %, |
| Mo: | 0,002 - 1,0 %, |
| Ni: | 0,01 - 2,0 %, |
| Ca: | 0,0005 - 0,01 %, |
| W: | 0,001 - 1,0 %, |
| Ce+La: | 0,01 - 0,03 %, |

besteht;

b) Durcherwärmen der Bramme oder Dünnbramme bei einer Temperatur (T1) von 1100 - 1320 °C;

c) Vorwalzen der durcherwärmten Bramme oder Dünnbramme zu einem Vorband mit einer Vorbandtemperatur (T2) von 800 - 1200 °C;

d) Warmwalzen des Vorband zu einem warmgewalzten Stahlflachprodukt mittels einer Walzstraße, wobei vor und während des Warmwalzens des Vorband die lokale Temperatur des Vorbandes so eingestellt wird, dass die Temperaturen der einzelnen Abschnitte des Vorbandes beim Warmwalzen um nicht mehr als 60 K variieren und wobei die Endwalztemperatur (T3) 750 - 910 °C beträgt;

e) Abkühlen des warmgewalzten Stahlflachprodukt auf eine Haspeltemperatur (T4) von 500 - 670 °C;

f) Haspeln des warmgewalzten Stahlflachprodukts;

g) Entzundern des warmgewalzten Stahlflachprodukts;

h) optionales Kaltwalzen des Stahlflachprodukts, wobei der Kaltwalzgrad mindestens 30 % beträgt;

i) Glühen des Stahlflachprodukts bei einer Glühtemperatur (T5) von 650 - 900 °C;

j) Abkühlen des Stahlflachprodukts auf eine Zwischentemperatur (T6), welche 650 - 800 °C, bevorzugt 670 - 800 °C beträgt;

k) Optionales Beschichten des auf die Zwischentemperatur abgekühlten Stahlflachprodukts mit einem Korrosionsschutzüberzug durch Schmelztauchbeschichten in einem Schmelzenbad mit einer Schmelzentemperatur (T7) 660 - 800 °C, bevorzugt 680 - 740 °C;

l) Abkühlen des Stahlflachprodukts auf Raumtemperatur, wobei die erste Abkühldauer $t_{mT}$ im Temperaturbereich zwischen 600 °C und 450 °C mehr als 10 s, insbesondere mehr als 14 s beträgt und die zweite Abkühldauer $t_{nT}$ im Temperaturbereich zwischen 400 °C und 300 °C mehr als 8 s, insbesondere mehr als 12 s beträgt;

m) optionales Dressieren des Stahlflachprodukts.

9. Verfahren nach Satz 8, wobei für die Elementgehalte gilt:

$$0.03 < (Mo \cdot Cr \cdot Ti \cdot V \cdot Nb)^{\frac{C}{5}} < 0,4$$

10. Verfahren nach einem der Sätze 8 bis 9, wobei für die Elementgehalte gilt:

$$Ni + Cr \leq 1,1$$

11. Verfahren nach einem der Sätze 8 bis 9 dadurch gekennzeichnet, dass beim Schmelztauchbeschichten ein Schmelzbad verwendet wird, das den auf das Stahlflachprodukt aufzubringenden Korrosionsschutz in flüssiger Form enthält, welche aus 0,1 - 15 Gew.-% Si, optional 2 - 4 Gew.-% Fe, optional bis zu 5 Gew.-% Alkali- oder Erdalkalimetalle und optional bis zu 15 % Gew.-% Zn, und optionalen weiteren Bestandteilen, deren Gehalte in Summe auf höchstens 2,0 Gew.-% beschränkt sind, und als Rest Aluminium besteht.

12. Blechformteil geformt aus einem Stahlflachprodukt, umfassend ein Stahlsubstrat aus Stahl, der neben Eisen und unvermeidbaren Verunreinigungen (in Gew.-%) aus:

| | |
|---|---|
| C: | 0,25 - 0,8 %, |
| Si: | 0,01 - 2,0 %, |
| Al: | 0,001 - 1,0 %, |
| B: | 0,0005 - 0,01 %, |
| P: | ≤ 0,03 %, |
| S: | ≤ 0,02 %, |
| N: | ≤ 0,03 %, |
| Sn: | ≤ 0,03 %, |
| As: | ≤ 0,01 %, |
| Sb: | ≤ 0,02 %, |

mindestens eines der Elemente aus der Gruppe umfassend Ti, Nb und V mit der Maßgabe, dass für die Gehalte gilt:

| | |
|---|---|
| Ti: | 0,008 - 0,10 %, |
| Nb: | 0,01 - 0,07 %, |
| V: | 0,01 - 0,4 %, |

sowie optional einem oder mehreren der Elemente "Cr, Mn, Co, Cu, Mo, Ni, Ca, W, Ce, La" in folgenden Gehalten:

| | |
|---|---|
| Cr: | 0,01 - 1,0 %, |
| Mn: | 0,01 - 3,5 %, |
| Co: | 0,05 - 1,0 %, |
| Cu: | 0,01 - 0,2 %, |
| Mo: | 0,002 - 1,0 %, |
| Ni: | 0,01 - 2,0 %, |
| Ca: | 0,0005 - 0,01 %, |
| W: | 0,001 - 1,0 %, |
| Ce+La: | 0,01 - 0,03 %, |

besteht, wobei für einen Dispersionsgrad $D_1$ von Ausscheidungen im oberflächennahen Drittel des Stahlsubstrates gilt:

$$25 \cdot 10^{-6}\frac{1}{nm} < D_1 < 5 \cdot 10^{-3}\frac{1}{nm},$$

und optional einen Korrosionsschutzüberzug.

13. Blechformteil nach Satz 12, wobei für die Elementgehalte gilt:

$$0.03 < (Mo \cdot Cr \cdot Ti \cdot V \cdot Nb)^{\frac{C}{5}} < 0,4$$

14. Blechformteil nach einem der Sätze 12 bis 13, wobei für die Elementgehalte gilt:

$$Ni + Cr \leq 1,1$$

15. Blechformteil nach einem der Sätze 12 bis 14, wobei das Blechformteil zumindest teilweise eine Zugfestigkeit von mindestens 1500 MPa, bevorzugt mindestens 1750 MPa aufweist.

16. Blechformteil nach einem der Sätze 12 bis 15, wobei der Korrosionsschutzüberzug ein Korrosionsschutzüberzug auf Aluminiumbasis ist und eine Legierungsschicht und eine Al-Basisschicht umfasst.

17. Blechformteil nach Satz 16 dadurch gekennzeichnet, dass für einen Dispersionsgrad $D_2$ von Ausscheidungen in der Legierungsschicht gilt:

$$25 \cdot 10^{-6} \frac{1}{nm} < D_2 < 5 \cdot 10^{-3} \frac{1}{nm}$$

18. Verfahren zum Herstellen eines Blechformteils, umfassend folgende Arbeitsschritte:

a) Bereitstellen eines Blechzuschnitts aus einem Stahlflachprodukt nach einem der Sätze 1 bis 6;

b) Erwärmen des Blechzuschnitts derart, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100 °C aufweist, wobei Ms die der Martensitstarttemperatur bezeichnet;

c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20 s, bevorzugt höchstens 15 s, beträgt;

d) Warmpressformen des Blechzuschnitts zu dem Blechformteil, wobei der Zuschnitt im Zuge des Warmpressformens über eine Dauer $t_{WZ}$ von mehr als 1s mit einer zumindest teilweise mehr als 30 K/s betragenden Abkühlgeschwindigkeit $r_{WZ}$ auf die Zieltemperatur $T_{Ziel}$ abgekühlt und optional dort gehalten wird;

e) Entnehmen des auf die Zieltemperatur $T_{Ziel}$ abgekühlten Blechformteils aus dem Werkzeug.

**Tabelle 1 (Stahlsorten)**

| Stahl | C | Mn | Si | Al | Mo | Ni | Cr | Ti | v | Nb | B | N | P | S | Sb | Co | Ca | (Mo · Cr · Ti . | Ni+Cr |
|---|---|---|---|---|---|---|---|---|---|---|---|---|---|---|---|---|---|---|---|
| A | 0,31 | 1,1 | 0,15 | 0,2 | 0,1 | 0,03 | 0,11 | 0,008 | 0,15 | 0,02 | 0,002 | 0,004 | 0,005 | 0,0005 | 0,005 | 0,1 | 0,0006 | 0,391 | 0,14 |
| B | 0,326 | 1,4 | 0,266 | 0,041 | 0,006 | 0,013 | 0,265 | 0,042 | 0,202 | 0,003 | 0,0019 | 0,0056 | 0,013 | 0,002 | 0,003 | 0,006 | 0,0005 | 0,330 | 0,278 |
| C | 0,34 | 0,62 | 0,62 | 0,033 | 0,15 | 0,42 | 0,52 | 0,025 | 0,04 | 0,035 | 0,0028 | 0,0045 | 0,011 | 0,0015 | 0,001 | 0,007 | 0,001 | 0,418 | 0,94 |
| D | 0,33 | 0,8 | 0,52 | 0,043 | 0,31 | 0,76 | 0,91 | 0,032 | 0,22 | 0,042 | 0,0032 | 0,0043 | 0,01 | 0,002 | 0,0015 | 0,001 | 0,003 | 0,538 | 1,67 |
| E | 0,37 | 0,66 | 0,63 | 0,024 | 0,22 | 1,12 | 0,65 | 0,008 | 0,12 | 0,028 | 0,0021 | 0,0041 | 0,015 | 0,001 | 0,0011 | 0,0042 | 0,0005 | 0,397 | 1,77 |
| F | 0,32 | 2,0 | 0,26 | 0,7 | 0,25 | 0,035 | 0,3 | 0,01 | 0,20 | 0,003 | 0,0035 | 0,0042 | 0,001 | 0,0007 | 0,001 | 0,11 | 0,0007 | 0,392 | 0,335 |
| G | 0,34 | 1,05 | 0,16 | 0,2 | 0,1 | 0,027 | 0,12 | 0,0092 | 0,04 | 0,025 | 0,0025 | 0,0045 | 0,005 | 0,0006 | 0,004 | 0,12 | 0,0005 | 0,336 | 0,147 |
| H | 0,343 | 0,6 | 0,5 | 0,7 | 0,12 | 0,4 | 0,26 | 0,03 | 0,18 | 0,003 | 0,0019 | 0,006 | 0,012 | 0,002 | 0,003 | 0,006 | 0,0006 | 0,370 | 0,66 |
| I | 0,347 | 0,8 | 0,5 | 0,25 | 0,5 | 0,4 | 0,301 | 0,045 | 0,198 | 0,07 | 0,0018 | 0,0052 | 0,012 | 0,002 | 0,003 | 0,008 | 0,0005 | 0,525 | 0,701 |
| J | 0,43 | 0,25 | 0,19 | 0,035 | 0,7 | 0,05 | 0,05 | 0,013 | 0,004 | 0,013 | 0,0021 | 0,004 | 0,012 | 0,0005 | 0,005 | 0,05 | 0,0008 | 0,221 | 0,1 |
| K | 0,32 | 1,4 | 0,26 | 0,7 | 0,25 | 0,035 | 0,3 | 0,01 | 0,20 | 0,06 | 0,0035 | 0,0042 | 0,001 | 0,0007 | 0,001 | 0,11 | 0,0012 | 0,475 | 0,335 |
| L | 0,343 | 0,6 | 0,5 | 0,7 | 0,12 | 0,4 | 0,26 | 0,03 | 0,18 | 0,003 | 0,0019 | 0,006 | 0,012 | 0,002 | 0,003 | 0,006 | 0,0015 | 0,370 | 0,66 |
| M | 0,347 | 0,8 | 0,5 | 0,25 | 0,5 | 0,4 | 0,301 | 0,045 | 0,198 | 0,07 | 0,0018 | 0,0052 | 0,012 | 0,002 | 0,003 | 0,008 | 0,0025 | 0,525 | 0,701 |
| Rest Eisen und unvermeidbare Verunreinigungen. Angaben jeweils in Gew.-%; | | | | | | | | | | | | | | | | | | | |

EP 4 610 381 A2

Tabelle 2 (Herstellungsbedingungen Stahlflachprodukt)

| Versuchsnummer | Stahlsorte | T1 [°C] | Temperiermaßnahme | T2 [°C] | ΔT2 [K] | T3 [°C] | T2/T3 | T4 [°C] | KWG [%] | Dicke [mm] |
|---|---|---|---|---|---|---|---|---|---|---|
| 1 | A | 1280 | Ja | 850 | 38 | 842 | 1,01 | 632 | 52 | 1,0 |
| 2 | B | 1285 | Ja | 1018 | 25 | 848 | 1,2 | 636 | 53 | 1,5 |
| 3 | C | 1282 | Ja | 938 | 37 | 845 | 1,11 | 634 | 52 | 1,48 |
| 4 | D | 1277 | Ja | 1042 | 27 | 847 | 1,23 | 637 | 54 | 1,38 |
| 5 | E | 1284 | Ja | 1010 | 25 | 856 | 1,18 | 640 | 48 | 1,67 |
| 6 | F | 1279 | Ja | 891 | 28 | 849 | 1,05 | 642 | 59 | 1,85 |
| 7 | G | 1290 | Ja | 967 | 24 | 879 | 1,1 | 599 | 34 | 2,0 |
| 8 | H | 1280 | Ja | 989 | 40 | 860 | 1,15 | 608 | 45 | 1,5 |
| 9 | I | 1275 | Ja | 848 | 43 | 785 | 1,08 | 612 | 51 | 1,8 |
| 10 | J | 1295 | Ja | 997 | 39 | 890 | 1,12 | 635 | 49 | 1,3 |
| <u>11</u> | K | 1280 | <u>Nein</u> | 853 | <u>122</u> | 812 | 1,05 | 608 | 56 | 1,5 |
| <u>12</u> | L | <u>1020</u> | Ja | 774 | 32 | 815 | 0,95 | 616 | 50 | 1,5 |
| <u>13</u> | M | <u>1350</u> | Ja | 1162 | 36 | 830 | 1,4 | 630 | 44 | 1,5 |
| 14 | A | 1280 | Ja | 850 | 38 | 842 | 1,01 | 632 | 52 | 1,0 |
| 15 | E | 1284 | Ja | 1010 | 25 | 856 | 1,18 | 640 | 48 | 1,67 |
| 16 | J | 1295 | Ja | 997 | 39 | 890 | 1,12 | 635 | 49 | 1,3 |

**Tabelle 3 (Herstellungsbedingungen Beschichtung)**

| Versuchsnummer | Stahlsorte | T5 [°C] | T6 [°C] | T7 [°C] | Schmelzenanalyse ([Gew.-%], Rest jeweils Al) | | | | Schichtdicke (einseitig) [μm] | $t_{mT}$ [s] | $t_{nT}$ [s] | Dispersionsgrad $D_1$ |
|---|---|---|---|---|---|---|---|---|---|---|---|---|
| | | | | | Si | Fe | Mg | Sonstige | | | | |
| 1 | A | 737 | 717 | 712 | 8,5 | 3,5 | 0,35 | <1 | 23 | 24 | 28 | 4,5x10^-4 |
| 2 | B | 871 | 713 | 700 | 8,5 | 3,6 | 0,2 | <1 | 27 | 18 | 19 | 6,8x10^-4 |
| 3 | C | 721 | 676 | 674 | 8,8 | 3,4 | 0,22 | <1 | 19 | 20 | 21 | 5,3x10^-4 |
| 4 | D | 850 | 795 | 783 | 8,6 | 3,2 | 0,45 | <1 | 23 | 15 | 17 | 5,0x10^-4 |
| 5 | E | 834 | 800 | 787 | 9,2 | 3,8 | 0,36 | <1 | 24 | 14 | 17 | 3,3x10^-3 |
| 6 | F | 812 | 775 | 771 | 9 | 2,8 | 0,5 | <1 | 20 | 22 | 23 | 3,0x10^-4 |
| 7 | G | 845 | 784 | 779 | 9,5 | 2,9 | 0 | <1 | 23 | 25 | 28 | 8,7x10^-4 |
| 8 | H | 746 | 717 | 714 | 8 | 3,3 | 0 | <1 | 23 | 16 | 21 | 2,8 x10^-4 |
| 9 | I | 757 | 706 | 697 | 8,2 | 3,5 | 0,3 | <1 | 25 | 18 | 19 | 3,5x10^-5 |
| 10 | J | 823 | 788 | 781 | 9,1 | 3,6 | 0,31 | <1 | 28 | 23 | 27 | 1,2x10^-3 |
| 11 | K | 890 | 785 | 782 | 8,6 | 2,9 | 0 | <1 | 25 | 16 | 21 | 5,5x10^-3 |
| 12 | L | 770 | 736 | 732 | 8,5 | 3 | 0,23 | <1 | 23 | 22 | 24 | 2,4x10^-6 |
| 13 | M | 732 | 679 | 664 | 9 | 3,2 | 0,3 | <1 | 24 | 19 | 19 | 9,8x10^-3 |
| 14 | A | 735 | 720 | | | | | | | 24 | 27 | 5,3x10^-4 |
| 15 | E | 817 | 780 | | | | | | | 15 | 19 | 3,7x10^-3 |
| 16 | J | 829 | 795 | | | | | | | 21 | 25 | 1,4x10^-3 |

**Tabelle 4 (Parameter Warmumformung)**

| Versuchsnummer | Mittlere Aufheizgeschwindigkeit $r_{Ofen}$ [30 - 700 °C] [K/s] | $T_{Ofen}$ [°C] | tOfen [s] | Taupunkt [°C] | Tranferzeit [s] | $T_{Einig}$ [°C] | $T_{WZ}$ [°C] | $t_{WZ}$ [s] | Abkühlgeschwindigkeit $r_{WZ}$ [K/s] | $T_{Ziel}$ [°C] |
|---|---|---|---|---|---|---|---|---|---|---|
| 1 | 8 | 880 | 260 | 5 | 8 | 720 | RT | 15 | 50 | 50 |
| 2 | 8 | 930 | 360 | 10 | 8 | 790 | RT | 15 | 50 | 50 |
| 3 | 8 | 925 | 300 | -5 | 8 | 790 | RT | 15 | 50 | 50 |
| 4 | 8 | 910 | 300 | -15 | 8 | 770 | RT | 15 | 50 | 50 |
| 5 | 8 | 855 | 360 | 16 | 8 | 740 | RT | 15 | 50 | 50 |
| 6 | 8 | 950 | 360 | 15 | 8 | 825 | RT | 15 | 50 | 50 |
| 7 | 8 | 920 | 420 | 8 | 8 | 810 | RT | 15 | 50 | 50 |
| 8 | 8 | 890 | 320 | 7 | 8 | 760 | RT | 15 | 50 | 50 |
| 9 | 8 | 930 | 500 | 3 | 8 | 810 | RT | 15 | 50 | 50 |
| 10 | 8 | 950 | 600 | 5 | 8 | 800 | RT | 15 | 50 | 50 |
| 11 | 8 | 920 | 360 | 7 | 8 | 780 | RT | 15 | 50 | 50 |
| 12 | 8 | 950 | 360 | 7 | 8 | 810 | RT | 15 | 50 | 50 |
| 13 | 8 | 890 | 360 | 7 | 8 | 760 | RT | 15 | 50 | 50 |
| 14 | 8 | 880 | 260 | 5 | 8 | 720 | RT | 15 | 50 | 50 |
| 15 | 8 | 855 | 360 | 16 | 8 | 740 | RT | 15 | 50 | 50 |
| 16 | 8 | 950 | 600 | 5 | 8 | 800 | RT | 15 | 50 | 50 |

**Tabelle 5 (Blechformteil)**

| Versuchsnummer | Stahlsorte | Hdiff [ppm] | Biegewinkel [°] | Zugfestigkeit [MPa] | Dispersions- grad $D_2$ |
|---|---|---|---|---|---|
| 1 | A | 0,08 | 42 | 1870 | 6,6x10^-4 |
| 2 | B | 0,1 | 35 | 1750 | 9,0 x10^-4 |
| 3 | C | 0,08 | 44 | 1810 | 1,0x10^-3 |
| 4 | D | 0,05 | 43 | 1870 | 8,1x10^-4 |
| 5 | E | 0,16 | 35 | 1890 | 3,9x10^-3 |
| 6 | F | 0,07 | 35 | 1980 | 5, 2x10^-4 |
| 7 | G | 0,19 | 41 | 1920 | 1,3x10^-3 |
| 8 | H | 0,17 | 39 | 1880 | 3,8 x10^-4 |
| 9 | I | 0,05 | 41 | 1850 | 6,7x10^-5 |
| 10 | J | 0,05 | 33 | 1950 | 1,8x10^-3 |
| 11 | K | 0,18 | 25 | 1910 | 5,8*10^-3 |
| 12 | L | 0,32 | 32 | 1870 | 3,5*10^-6 |
| 13 | M | 0,09 | 23 | 1900 | 1,3*10^-2 |
| 14 | A | | 39 | 1880 | |
| 15 | E | | 36 | 1870 | |
| 16 | J | | 34 | 1930 | |

**Patentansprüche**

1.  Stahlflachprodukt für die Warmumformung, umfassend ein Stahlsubstrat aus Stahl, der neben Eisen und unvermeidbaren Verunreinigungen (in Gew.-%) aus

    | | |
    |---|---|
    | C: | 0,25 - 0,8 %, |
    | Si: | 0,01 - 2,0 %, |
    | Al: | 0,001 - 1,0 %, |
    | B: | 0,0005 - 0,01 %, |
    | P: | ≤ 0,03 %, |
    | S: | ≤ 0,02 %, |
    | N: | ≤ 0,03 %, |
    | Sn: | ≤ 0,03 %, |
    | As: | ≤ 0,01 %, |
    | Sb: | ≤ 0,02 %, |

    mindestens eines der Elemente aus der Gruppe umfassend Ti, Nb und V mit der Maßgabe, dass für die Gehalte gilt:

    | | |
    |---|---|
    | Ti: | 0,008 - 0,10 %, |
    | Nb: | 0,01 - 0,07 %, |
    | V: | 0,01 - 0,4 %, |

    sowie optional einem oder mehreren der Elemente "Cr, Mn, Co, Cu, Mo, Ni, Ca, W, Ce, La" in folgenden Gehalten:

    | | |
    |---|---|
    | Cr: | 0,01 - 1,0 %, |

(fortgesetzt)

| | |
|---|---|
| Mn: | 0,01 - 3,5 %, |
| Co: | 0,05 - 1,0 %, |
| Cu: | 0,01 - 0,2 %, |
| Mo: | 0,002 - 1,0 %, |
| Ni: | 0,01 - 2,0 %, |
| Ca: | 0,0005 - 0,01 %, |
| W: | 0,001 - 1,0 %, |
| Ce+La: | 0,01 - 0,03 %, |

besteht, wobei für einen Dispersionsgrad $D_1$ von Ausscheidungen im oberflächennahen Drittel des Stahlsubstrates gilt:

$$25 \cdot 10^{-6} \frac{1}{nm} < D_1 < 5 \cdot 10^{-3} \frac{1}{nm}$$

2. Stahlflachprodukt nach Anspruch 1, wobei die Elemente Mo, Cr, Ti, V und Nb im Stahl vorhanden sind und wobei für die Elementgehalte gilt:

$$0.03 < (Mo \cdot Cr \cdot Ti \cdot V \cdot Nb)^{\frac{C}{5}} < 0,4$$

3. Stahlflachprodukt nach einem der voranstehenden Ansprüche, **dadurch gekennzeichnet, dass** es auf mindestens einer Seite einen Korrosionsschutzüberzug aufweist.

4. Stahlflachprodukt nach Anspruch 3, **dadurch gekennzeichnet, dass** der Korrosionsschutzüberzug ein Korrosionsschutzüberzug auf Aluminium-Basis ist und eine Legierungsschicht und eine Al-Basisschicht aufweist.

5. Stahlflachprodukt nach Anspruch 4, **dadurch gekennzeichnet, dass** die Legierungsschicht aus 25 - 50 Gew.-% Fe, 5 - 20 Gew.-% Si, optionalen weiteren Bestandteilen, deren Gehalte in Summe auf höchstens 5,0 Gew.-% beschränkt sind, und als Rest Aluminium besteht und/oder die Al-Basisschicht aus 1,0 - 15 Gew.-% Si, optional 2 - 4 Gew.-% Fe, optional bis zu 5,0 Gew.-% Alkali- oder Erdalkalimetalle, optional bis zu 10 % Zn und optionalen weiteren Bestandteilen, deren Gehalte in Summe auf höchstens 2,0 Gew.-% beschränkt sind, und als Rest Aluminium besteht.

6. Stahlflachprodukt nach einem der Ansprüche 4 bis 5, **dadurch gekennzeichnet, dass** für einen Dispersionsgrad $D_2$ von Ausscheidungen in der Legierungsschicht gilt:

$$25 \cdot 10^{-6} \frac{1}{nm} < D_2 < 5 \cdot 10^{-3} \frac{1}{nm}$$

7. Verfahren zum Herstellen eines Stahlflachproduktes für die Warmumformung mit einem Korrosionsschutzüberzug, umfassend folgende Arbeitsschritte:

   a) Zurverfügungstellen einer Bramme oder einer Dünnbramme, die aus Stahl, der neben Eisen und unvermeidbaren Verunreinigungen (in Gew.-%) aus

| | |
|---|---|
| C: | 0,25 - 0,8 %, |
| Si: | 0,01 - 2,0 %, |
| Al: | 0,001 - 1,0 %, |
| B: | 0,0005 - 0,01%, |
| P: | $\leq$ 0,03 %, |
| S: | $\leq$ 0,02 %, |
| N: | $\leq$ 0,03 %, |

(fortgesetzt)

| | |
|---|---|
| Sn: | ≤ 0,03 %, |
| As: | ≤ 0,01 %, |
| Sb: | ≤ 0,02 %, |

mindestens eines der Elemente aus der Gruppe umfassend Ti, Nb und V mit der Maßgabe, das für die Gehalte gilt:

| | |
|---|---|
| Ti: | 0,008 - 0,10 %, |
| Nb: | 0,01- 0,07 %, |
| V: | 0,01 - 0,4 %, |

sowie optional einem oder mehreren der Elemente "Cr, Mn, Co, Cu, Mo, Ni, Ca, W, Ce, La" in folgenden Gehalten:

| | |
|---|---|
| Cr: | 0,01 - 1,0 %, |
| Mn: | 0,01 - 3,5 %, |
| Co: | 0,05 - 1,0 %, |
| Cu: | 0,01 - 0,2 %, |
| Mo: | 0,002 - 1,0 %, |
| Ni: | 0,01 - 2,0 %, |
| Ca: | 0,0005 - 0,01 %, |
| W: | 0,001 - 1,0 %, |
| Ce+La: | 0,01- 0,03 %, |

besteht;

b) Durcherwärmen der Bramme oder Dünnbramme bei einer Temperatur (T1) von 1100 - 1320 °C;

c) Vorwalzen der durcherwärmten Bramme oder Dünnbramme zu einem Vorband mit einer Vorbandtemperatur (T2) von 800 - 1200 °C;

d) Warmwalzen des Vorband zu einem warmgewalzten Stahlflachprodukt mittels einer Walzstraße, wobei vor und während des Warmwalzens des Vorband die lokale Temperatur des Vorbandes so eingestellt wird, dass die Temperaturen der einzelnen Abschnitte des Vorbandes beim Warmwalzen um nicht mehr als 60 K variieren und wobei die Endwalztemperatur (T3) 750 - 910 °C beträgt;

e) Abkühlen des warmgewalzten Stahlflachprodukts auf eine Haspeltemperatur (T4) von 500 - 670 °C;

f) Haspeln des warmgewalzten Stahlflachprodukts;

g) Entzundern des warmgewalzten Stahlflachprodukts;

h) optionales Kaltwalzen des Stahlflachprodukts, wobei der Kaltwalzgrad mindestens 30 % beträgt;

i) Glühen des Stahlflachprodukts bei einer Glühtemperatur (T5) von 650 - 900 °C;

j) Abkühlen des Stahlflachprodukts auf eine Zwischentemperatur (T6), welche 650 - 800 °C, bevorzugt 670 - 800 °C beträgt;

k) Optionales Beschichten des auf die Zwischentemperatur abgekühlten Stahlflachprodukts mit einem Korrosionsschutzüberzug durch Schmelztauchbeschichten in einem Schmelzenbad mit einer Schmelzentemperatur (T7) 660 - 800 °C, bevorzugt 680 - 740 °C;

l) Abkühlen des Stahlflachprodukts auf Raumtemperatur, wobei die erste Abkühldauer $t_{mT}$ im Temperaturbereich zwischen 600 °C und 450 °C mehr als 10s, insbesondere mehr als 14s beträgt und die zweite Abkühldauer $t_{nT}$ im Temperaturbereich zwischen 400 °C und 300 °C mehr als 8s, insbesondere mehr als 12s beträgt;

m) optionales Dressieren des Stahlflachprodukts.

8. Verfahren nach Anspruch 7, wobei für die Elementgehalte gilt:

$$0.03 < (Mo \cdot Cr \cdot Ti \cdot V \cdot Nb)^{\frac{C}{5}} < 0,4$$

9. Verfahren nach einem der Ansprüche 7 bis 8 **dadurch gekennzeichnet, dass** beim Schmelztauchbeschichten ein Schmelzbad verwendet wird, das den auf das Stahlflachprodukt aufzubringenden Korrosionsschutz in flüssiger Form enthält, welche aus 0,1 - 15 Gew.-% Si, optional 2 - 4 Gew.-% Fe, optional bis zu 5 Gew.-% Alkali- oder Erdalkalimetalle und optional bis zu 15 % Gew.-% Zn, und optionalen weiteren Bestandteilen, deren Gehalte in Summe auf höchstens 2,0 Gew.-% beschränkt sind, und als Rest Aluminium besteht.

10. Blechformteil geformt aus einem Stahlflachprodukt, umfassend ein Stahlsubstrat aus Stahl, der neben Eisen und unvermeidbaren Verunreinigungen (in Gew.-%) aus:

| | |
|---|---|
| C: | 0,25 - 0,8 %, |
| Si: | 0,01 - 2,0 %, |
| Al: | 0,001 - 1,0 %, |
| B: | 0,0005 - 0,01 %, |
| P: | $\leq 0,03$ %, |
| S: | $\leq 0,02$ %, |
| N: | $\leq 0,03$ %, |
| Sn: | $\leq 0,03$ %, |
| As: | $\leq 0,01$ %, |
| Sb: | $\leq 0,02$ %, |

mindestens eines der Elemente aus der Gruppe umfassend Ti, Nb und V mit der Maßgabe, dass für die Gehalte gilt:

| | |
|---|---|
| Ti: | 0,008 - 0,10 %, |
| Nb: | 0,01 - 0,07 %, |
| V: | 0,01 - 0,4 %, |

sowie optional einem oder mehreren der Elemente "Cr, Mn, Co, Cu, Mo, Ni, Ca, W, Ce, La" in folgenden Gehalten:

| | |
|---|---|
| Cr: | 0,01 - 1,0 %, |
| Mn: | 0,01 - 3,5 %, |
| Co: | 0,05 - 1,0 %, |
| Cu: | 0,01 - 0,2 %, |
| Mo: | 0,002 - 1,0 %, |
| Ni: | 0,01 - 2,0 %, |
| Ca: | 0,0005 - 0,01 %, |
| W: | 0,001 - 1,0 %, |
| Ce+La: | 0,01 - 0,03 %, |

besteht, wobei für einen Dispersionsgrad $D_1$ von Ausscheidungen im oberflächennahen Drittel des Stahlsubstrates gilt:

$$25 \cdot 10^{-6}\frac{1}{nm} < D_1 < 5 \cdot 10^{-3}\frac{1}{nm},$$

und optional einen Korrosionsschutzüberzug.

11. Blechformteil nach Anspruch 10, wobei für die Elementgehalte gilt:

$$0.03 < (Mo \cdot Cr \cdot Ti \cdot V \cdot Nb)^{\frac{C}{5}} < 0,4$$

12. Blechformteil nach einem der Ansprüche 10 bis 11, wobei das Blechformteil zumindest teilweise eine Zugfestigkeit von mindestens 1500 MPa, bevorzugt mindestens 1750 MPa aufweist.

**13.** Blechformteil nach einem der Ansprüche 10 bis 12, wobei der Korrosionsschutzüberzug ein Korrosionsschutzüberzug auf Aluminiumbasis ist und eine Legierungsschicht und eine Al-Basisschicht umfasst.

**14.** Blechformteil nach Anspruch 13 **dadurch gekennzeichnet, dass** für einen Dispersionsgrad $D_2$ von Ausscheidungen in der Legierungsschicht gilt:

$$25 \cdot 10^{-6} \frac{1}{nm} < D_2 < 5 \cdot 10^{-3} \frac{1}{nm}$$

**15.** Verfahren zum Herstellen eines Blechformteils, umfassend folgende Arbeitsschritte:

a) Bereitstellen eines Blechzuschnitts aus einem Stahlflachprodukt nach einem der Ansprüche 1 bis 6;
b) Erwärmen des Blechzuschnitts derart, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100 °C aufweist, wobei Ms die der Martensitstarttemperatur bezeichnet;
c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20 s, bevorzugt höchstens 15 s, beträgt;
d) Warmpressformen des Blechzuschnitts zu dem Blechformteil, wobei der Zuschnitt im Zuge des Warmpressformens über eine Dauer $t_{WZ}$ von mehr als 1 s mit einer zumindest teilweise mehr als 30 K/s betragenden Abkühlgeschwindigkeit $r_{WZ}$ auf die Zieltemperatur $T_{Ziel}$ abgekühlt und optional dort gehalten wird;
e) Entnehmen des auf die Zieltemperatur $T_{Ziel}$ abgekühlten Blechformteils aus dem Werkzeug.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019223854 A1
- EP 2553133 B1
- EP 2993248 B1
- EP 3175006 A1

**In der Beschreibung aufgeführte Nicht-Patentliteratur**

- **HOUGARDY, HP**. Werkstoffkunde Stahl. Verlag Stahleisen GmbH, 1984, 229